# EUROPÄISCHE PATENTSCHRIFT

(11) **EP 3 898 183 B1**
(45) Veröffentlichungstag und Bekanntmachung des Hinweises auf die Patenterteilung: **15.11.2023**
(21) Anmeldenummer: 19821104.7
(22) Anmeldetag: 19.12.2019
(51) Int. Cl.: B29C 64/153, B29C 64/40, B29C 64/336, B33Y 70/00, B33Y 10/00

(54) **PULVERSCHICHTUNGSVERFAHREN ZUR FERTIGUNG 3D-GEDRUCKTER BAUTEILE MIT VERBESSERTEN MECHANISCHEN EIGENSCHAFTEN**
POWDER COATING METHOD FOR PRODUCING 3D-PRINTED COMPONENTS WITH IMPROVED MECHANICAL PROPERTIES
PROCÉDÉ DE REVÊTEMENT PAR POUDRE DESTINÉ À LA FABRICATION DE COMPOSANTS IMPRIMÉS EN TROIS DIMENSIONS PRÉSENTANT DES PROPRIÉTÉS MÉCANIQUES AMÉLIORÉES

(30) Priorität: 20.12.2018 EP 18214397
(43) Veröffentlichungstag der Anmeldung: 27.10.2021
(73) Patentinhaber: Stratasys, Inc., Eden Prairie, MN 55344 (US)
(72) Erfinder: ACHTEN, Dirk, 51375 Leverkusen (DE); METTMANN, Bettina, 50259 Pulheim (DE); BÜSGEN, Thomas, 51377 Leverkusen (DE); WAGNER, Roland, 51375 Leverkusen (DE); WOLF, Maximilian, 50823 Köln (DE)
(74) Vertreter: Davepon, Björn
(86) Internationale Anmeldenummer: PCT/EP2019/086161
(87) Internationale Veröffentlichungsnummer: WO 2020/127634

(56) Entgegenhaltungen:
- WO-A1-2015/197515
- DE-A1-102016 207 283
- US-A1- 2016 243 764

## Beschreibung

Die vorliegende Erfindung betrifft ein Verfahren zum Erzeugen eines Gegenstands mittels additiver Fertigung aus verschiedenen pulverförmigen Komponenten, wobei gleichzeitig mehrere pulverförmige Komponenten mit unterschiedlichen Schmelzpunkten ortsgenau abgelegt und die Pulverschichtung anschließend thermisch behandelt wird. Die vorliegende Erfindung betrifft ferner einen Gegenstand, welcher durch ein derartiges Verfahren hergestellt ist.

Als additive Fertigungsverfahren werden Verfahren bezeichnet, mit denen Gegenstände schichtweise zusammengesetzt werden. Sie unterscheiden sich somit prinzipiell von bekannten, abtragenden Verfahren, wie beispielsweise Fräsen oder Bohren, welche über Wegnahme von Material eines größeren Rohlings ihre Endgeometrie erhalten. Auf Basis der heute in additiven Fertigungsverfahren vorwiegend eingesetzten Polymere sind jedoch üblicherweise "nur" Gegenstände erhältlich, deren resultierenden mechanischen Eigenschaften sich grundlegend von den anderer kunststoffverarbeitenden Verfahren, beispielsweise dem Spritzgießen, unterscheiden. Bei der Verarbeitung durch additive Fertigungsverfahren verlieren die eingesetzten thermoplastischen Materialien ihre bekannte, spezifische Charakteristik.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material versprödet durch den Herstellungsprozess und verliert damit die PPtypischen zäh-elastischen Eigenschaften. Gründe hierfür sind in der Morphologie der Polymere in Verbindung mit dem Herstellungsverfahren zu finden. Während des Aufschmelzvorgangs mittels Laser oder IR und insbesondere beim Abkühlen bildet ein Anteil der Polymerketten kristalline, eng gepackte Strukturen. Es entstehen Bereiche mit teilkristalliner Morphologie, welche durch eine hohe Ordnung gekennzeichnet sind. Während des Aufschmelzens und Abkühlens wachsen diese Kristallite unregelmäßig an den Grenzen der nicht komplett aufgeschmolzenen Partikel sowie an den ehemaligen Korngrenzen der Pulverpartikel und an im Pulver enthaltenen Additiven. Diese Morphologie begünstigt unter mechanischer Belastung das Entstehen von Rissen. Die beim pulverbasierten additiven Verfahren nicht zu vermeidende Restporosität liefert einen weiteren Beitrag für das Risswachstum. Als Resultat zeigen die so hergestellten Bauteile insgesamt eher spröde Eigenschaften.

Auch die im Lasersintern eingesetzten pulverförmigen elastischen Polymere auf Basis von BlockCopolymeren zeigen ein für die eingesetzten Polymere untypisches Eigenschaftsprofil der fertigen Bauteile. Beim Lasersintern kommen thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE-Werkstoffs ist nicht mit der Festigkeit des daraus gefertigten Gegenstands korreliert. In der Praxis werden diese porösen Bauteile daher nachträglich mit flüssigen, aushärtenden Polymeren infiltriert, um das erforderliche Eigenschaftsprofil einzustellen. Die Festigkeit und Dehnung bleibt trotz dieser zusätzlichen Maßnahme auf einem eher niedrigen Niveau. Der zusätzliche Verfahrensaufwand führt - neben den immer noch unzureichenden mechanischen Eigenschaften - zu einer schlechten Wirtschaftlichkeit dieser Materialien und des gesamten Verfahrens.

Es wurden im Stand der Technik vielfältige Lösungen für die Verarbeitung dieser Polymerklassen im Rahmen additiver Verarbeitungsverfahren vorgeschlagen.

Die US 2005/0080191 A1 betrifft ein Pulversystem zur Verwendung in festen Freiform-Herstellungsverfahren, umfassend wenigstens ein Polymer mit reaktiven und verschmelzbaren Eigenschaften, wobei das wenigstens eine Polymer ausgewählt ist, um mit einem flüssigen Bindemittel zu reagieren und bei einer Temperatur oberhalb des Schmelzpunkts oder der Glasübergangstemperatur des wenigstens einen Polymers verschmelzbar zu sein. Das wenigstens eine Polymer kann wenigstens ein reaktives Polymer und wenigstens ein verschmelzbares Polymer umfassen und das wenigstens eine schmelzbare Polymer kann einen Schmelzpunkt oder eine Glasübergangstemperatur im Bereich von ca. 50 °C bis ca. 250 °C aufweisen.

DE 10 2016 207 283 A1 offenbart ein Verfahren zum additiven Erzeugen eines Bauteils, insbesondere für ein Kraftfahrzeug. Das Verfahren weist die folgenden Schritte auf: - Erzeugen eines Formkörpers aus einer Mehrzahl von übereinander angeordneten Formkörperschichten aus mindestens einem ersten Schichtmaterial und mindestens einem zweiten Schichtmaterial, wobei eine Anordnung des ersten Schichtmaterials einer Form des zu erzeugenden Bauteils entspricht oder im Wesentlichen entspricht, - Erwärmen des Formkörpers mittels einer Heizvorrichtung derart, dass das erste Schichtmaterial aufgeschmolzen wird, wobei benachbarte erste Schichtmaterialelemente miteinander verschmolzen werden und das zweite Schichtmaterial nicht aufgeschmolzen wird, - Abkühlen des Formkörpers derart, dass das erste Schichtmaterial verfestigt wird und - Entfernen des überschüssigen zweiten Schichtmaterials vom Formkörper zum Erzeugen des Bauteils.

US 2016/0243764 A1 beschreibt ein Verfahren zur Herstellung eines Gegenstands, umfassend: Ablegen einer ersten Schicht eines Objekt-Materials auf eine Stützsubstratelektrode; Auftragen eines leitenden Materials auf die erste Schicht; Ablegen einer ersten Schicht eines geladenen Pulvers auf ein intermediäres Substrat; Übertragen der ersten Schicht des geladenen Pulvers auf das intermediäre Substrat proximal zur erste Schicht des ersten Objekt-Materials und Anlagen eines elektrischen Überträgerfeldes, um einen Transfer der ersten Schicht des geladenen Pulvers von dem intermediären Substrat auf die erste Schicht der Substratstützelektrode zu bewirken, so dass eine erste Pulverschicht auf der ersten Schicht der Substratstützelektrode gebildet wird. Mehrere Pulverschichten können auf der ersten Schicht abgelegt werden. Das Verfahren kann weiterhin das Fusionieren der Pulverschicht(en) zur Bildung einer ersten fusionierten Schicht auf der Substratstützelektrode beinhalten.

WO 2015/197515 offenbart ein thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan, wobei mindestens 90 Gew.-% des Mittels einen Teilchendurchmesser von kleiner 0,25 mm aufweist, wobei das thermoplastische Polyurethan erhältlich ist aus der Reaktion der Komponenten a) mindestens ein organisches Diisocyanat b) mindestens eine mit gegenüber Isocyanatgruppen reaktiven Gruppen aufweisenden Verbindung mit einem zahlenmittleren Molekulargewicht (Mn) von 500 g/mol bis 6000 g/mol und einer zahlenmittleren Funktionalität der Gesamtheit der Komponenten unter b) von 1,8 bis 2,5 c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5 in Gegenwart von d) gegebenenfalls Katalysatoren e) gegebenenfalls Hilfs- und/oder Zusatzmitteln f) gegebenenfalls einen oder mehrere Kettenabbrecher. Das thermoplastische Polyurethan weist einen Schmelzbereich (DSC, Differential Scanning Calorimetry; zweite Aufheizung mit Aufheizrate 5K/min) von 20 bis 170 °C und eine Shore A Härte gemäß DIN ISO 7619-1 von 50 bis 95 auf. Bei einer Temperatur T beträgt die Schmelzvolumenrate (melt volume rate (MVR)) gemäß ISO 1133 5 bis 15 cm³/10 min. Die Änderung des MVR bei einer Erhöhung dieser Temperatur T um 20 °C ist kleiner als 90 cm³/10 min. Das Pulver dient zur Herstellung von Gegenständen in pulverbasierten additiven Fertigungsverfahren.

Im Stand der Technik existiert weiterhin der Bedarf an additiven Herstellungsverfahren, welche in der Lage sind, Bauteile mit zufriedenstellenden mechanischen und insgesamt homogenen Materialeigenschaften zu liefern.

Es ist daher die Aufgabe der vorliegenden Erfindung, die aus dem Stand der Technik bekannten Nachteile zumindest zum Teil zu überwinden. Insbesondere ist es die Aufgabe der vorliegenden Erfindung, eine Möglichkeit zu schaffen, durch welche eine hohe Stabilität der gefertigten Bauteile, insbesondere auch parallel zu einer Schichtrichtung und/oder insgesamt homogene Bauteileigenschaften, ermöglicht werden. Des Weiteren sollen die Nachteile einer langen Temperaturbelastung, wie sie Stand der Technik gängiger Sinterverfahren sind, vermieden werden.

Vorgeschlagen wird daher das erfindungsgemäße Verfahren gemäß Anspruch 1. Vorteilhafte Weiterbildungen sind in den Unteransprüchen angegeben. Sie können beliebig kombiniert werden, sofern sich aus dem Kontext nicht eindeutig das Gegenteil ergibt.

Gegenstand der vorliegenden Erfindung ist ein Verfahren zur additiven Fertigung von Bauteilen, umfassend die Schritte:
a) Ein- oder mehrmaliges Ablegen mindestens zweier verschiedener pulverförmiger Komponenten mit einem Unterschied im Schmelzpunkt von ≥ 50 °C auf einem Substrat oder auf eine schon abgelegte Schicht, wobei die pulverförmige Komponente mit dem niedrigsten Schmelzpunkt in der Form des Bauteiles und die pulverförmige Komponente mit dem höchsten Schmelzpunkt als Negativ dazu in einer Schicht abgelegt werden;
b) Hitzebehandeln der Pulverschichtung auf eine Temperatur oberhalb des Schmelzpunkts der Komponente mit dem niedrigsten Schmelzpunkt und unterhalb des Schmelzpunktes der Komponente mit dem höchsten Schmelzpunkt, wobei die Pulverbestandteile der Komponente mit dem niedrigeren Schmelzpunkt auf- und zumindest partiell zusammengeschmolzen werden;
c) Abkühlen der hitzebehandelten Pulverschichtung aus Schritt b) auf eine Temperatur unterhalb des Schmelzpunkt der am niedrigsten schmelzenden Komponente und
d) Entfernen der nicht zusammengeschmolzenen pulverförmigen Komponenten unter Erhalt des Bauteils.

In dem Verfahren ist entweder: die pulverförmige Komponente mit dem niedrigsten Schmelzpunkt aus der Gruppe ausgesucht bestehend aus Polyetheretherketon (PEEK), Polyaryletherketon (PAEK), Polyetherketonketon (PEKK), Polyethersulfone, Polyimid, Polyetherimid, Polyester, Polyamide, Polycarbonate, Polyurethane, Polyvinylchlorid, Polyoxymethylen, Polyvinylacetat, Polyacrylate, Polymethacrylate, Polyethylen, Polypropylen, Polylactid, ABS (Acrylnitril-Butadien-Styrol-Copolymere), PETG (Glycol modifiziertes Polyethylenterephtalat), Polystyrol oder Mischungen aus mindestens zwei der vorgenannten Polymere und
die pulverförmige Komponente mit dem höchsten Schmelzpunkt ist ein anorganisches Salz der Alkalimetalle, ein anorganisches Salz der Erdalkalimetalle oder eine Mischung aus mindestens zwei der vorgenannten Salze
oder: die pulverförmige Komponente mit dem niedrigsten Schmelzpunkt ist Polychloropren (CR), Polybutadien (BR), Polybutadiennitril (NBR), Hydriertes Polybutadiennitril (HNBR), Ethylenvinylacetat (EVA), Fluorkautschuk, Styrol-Butadien-Blockcopolymere (SBS), Polyvinylchlorid (PVC), Polyvinylacetat (PVA), Polyfluorethylen (PTFE) oder Polyarylsulfon und
die pulverförmige Komponente mit dem höchsten Schmelzpunkt ist NaCl, MgSO₄, MgCl₂ oder CaSO₄, mit der Ausnahme, dass CaSO₄, für Polyfluorethylen (PTFE) nicht vorgesehen ist.

Die pulverförmige Komponente mit dem niedrigsten Schmelzpunkt wird im Folgenden auch als "Aufbaumaterial" ("build material") bezeichnet und die pulverförmige Komponente mit dem höchsten Schmelzpunkt als "Stützmaterial". Wenngleich das erfindungsgemäße Verfahren für mehrere verschiedene Aufbaumaterialien und Stützmaterialien geeignet ist, bedeuten die Begriffe "höherer Schmelzpunkt" und "niedrigerer Schmelzpunkt", bezogen auf ein Verfahren mit einer Aufbaumaterialkomponente und einer Stützmaterialkomponente, gleichzeitig "höchster Schmelzpunkt" beziehungsweise "niedrigster Schmelzpunkt".

Das oben angegebene erfindungsgemäße Verfahren erlaubt auf besonders vorteilhafte Weise das Erzeugen eines Gegenstands mittels additiver Fertigung, wobei der erzeugte Gegenstand eine hohe Stabilität und homogene, insbesondere homogene mechanische Eigenschaften aufweist. Des Weiteren zeichnet sich das Verfahren durch eine sehr hohe Materialausbeute bezogen auf die zu sinternden Komponenten aus. Das Verfahren unterscheidet sich vom Stand der Technik besonders darin, dass mindestens zwei Pulver aufgetragen oder gedruckt werden, wovon mindestens ein Pulver im anschließenden Temperatur- oder Temperschritt inert ist. Dies bedeutet, dass die inerte, höherschmelzende Komponente in der Lage ist, die schmelzende Komponente mechanisch zu stabilisieren und im günstigenfalls zu verdichten. Im anschließenden Temperaturschritt kann zudem die thermische und mechanische Homogenität der Komponente mit dem niedrigeren Schmelzpunkt durch die höherschmelzende Komponente verbessert werden, welches ebenfalls zu besseren mechanischen Eigenschaften führt. Letzteres kann zudem durch eine verbesserte Wärmeleitfähigkeit der Komponente mit dem höheren Schmelzpunkt gefördert werden. Die Partikel der Komponente mit dem höheren Schmelzpunkt können zudem die Oberflächenstruktur und -rauigkeit der gesinterten Komponente mit dem niedrigeren Schmelzpunkt günstig beeinflussen. Die gesamte Pulverschichtung aus niedriger und höher schmelzender Komponente wird dabei der Hitzebehandlung oder dem Sintern unterzogen, wobei die einzelnen Verfahrensschritte der Schichtung und der Hitzebehandlung bevorzugt auch räumlich voneinander entkoppelt werden können. Dies vereinfacht die Prozesslogistik. Weiterhin weist das Verfahren folgende Vorteile auf:
1. Die Kosten der primären Pulverschichtungseinheit sind vergleichsweise gering, da weder ein beheizter Bauraum noch eine primäre Energiequelle verfahrensnotwendig sind. Der Bauprozess ist somit beliebig skalierbar und kann sogar analog einem kontinuierlichen Binderjetting Verfahren (Voxeljet AG, VXC800) betrieben werden.
2. Der Schritt b) der Hitzebehandlung oder Temperung kann räumlich und zeitlich beliebig von dem Herstellungsort des Verfahrensschrittes a), der primären Pulverschichtung, getrennt und mittels handelsüblicher Heizapparaturen vorgenommen werden.
3. Die Kosten für ungenutztes oder gealtertes Material können verfahrensbedingt gegen null gehen, da zumindest die Komponente mit dem höheren Schmelzpunkt inert ausgestaltet werden kann, so dass dies Komponente "unendlich" wiederverwendet werden kann.
4. Die Auswahl der inerten nicht schmelzenden Komponente kann in einem großen Anwendungsbereich auf einfache, nicht toxische und kostengünstige Alkali- oder Erdalkalimetallsalze von Cl, O, SO₄, CO₃ zurückgeführt werden, welche günstig, chemisch inert und darüber hinaus häufig wasserlöslich sind und bevorzugt eine höhere Dichte aufweisen als die schmelzende Komponente und somit eine kostengünstige und umweltfreundliche Reinigung der gewünschten additiv gefertigten Bauteile ermöglicht.
5. Weiterhin kann als Komponente mit niedrigem Schmelzpunkt eine breite Auswahl an thermoplastischem Polymermaterial verwendet werden, welches mittels eines additiven Verfahrens verarbeitet werden kann. Somit kann als Material beispielsweise jegliches Material verwendet werden, das sich unter geeigneten Bedingungen aufschmelzen lässt und das wieder erstarrt. Werden mehrere Komponenten mit ähnlichem, niedrigerem Schmelzpunkt verwendet, können diese in unterschiedlichen Schichten oder auch in denselben Schichten angeordnet sein.

Das erfindungsgemäße Verfahren erlaubt ferner die Verarbeitung fast beliebiger thermoplastischer Pulver, da die Probleme des Bauraumverfahrens im SLS- und HS-Prozess nicht auftauchen. Mit dem erfindungsgemäßen Verfahren können, nach Kenntnis der Erfinder erstmalig, auch nichtkristalline Thermoplasten verfahrenssicher, das heißt mit einer Bauraumtemperatur bevorzugt ≥ 5 °C besonders bevorzugt ≥ 20 °C und ganz besonders bevorzugt ≥ 40 °C bezogen auf die Erweichungstemperatur des eingesetzten Pulvers, bevorzugt auf Basis von organischen polymeren Materialien, zu mechanisch hochwertigen Bauteilen, das heißt Bauteilen mit mindestens 50% der Zugfestigkeit von spritzgegossenen Bauteilen, verarbeitet werden.

Im erfindungsgemäßen Verfahren können weiterhin komplexe Bauteilgeometrien realisiert werden, da das Pulverbett analog dem Pulver im SLS- und HS-Verfahren der Schwerkraft schützend entgegenwirken. Insgesamt ergeben sich logistische und Kostenvorteile über oben genanntes Verfahren, wobei zusätzlich noch Bauteile mit verbesserten mechanischen Eigenschaften erhältlich sind.

Ohne durch die Theorie gebunden zu sein werden die verbesserten mechanischen Eigenschaften darauf zurückgeführt, dass die Komponente mit dem niedrigeren Schmelzpunkt über die Einbettung in einer Matrix aus einer Komponente mit höheren Schmelzpunkt eine Stabilisierung erfährt, welches zu einem gleichmäßigeren Sinterprozess und somit zu gleichmäßigeren Oberflächen- und Bauteileigenschaften führt.

Die verbesserte Oberflächenstruktur äußert sich zum Beispiel in einer verringerten Porosität der Bauteiloberfläche. Die verbesserten Eigenschaften äußern sich zum Beispiel in einer erhöhten Härte des Gegenstandes, einem erhöhten Modul und/oder einer erhöhten Reißfestigkeit gegenüber dem nach dem Stand-der-Technik-gedruckten Gegenstand.

Häufig erfährt das in dieser Art als Pulver aufgetragene Material in einem nachgeschalteten Sinterprozess gegenüber einem SLS- oder HSLS-Verfahren einen höheren Schrumpf der aufgetragenen Pulvervolumina. Der daraus resultierende positive Effekt einer höheren Bauteildichte und -festigkeit wird vorzugsweise im Designprozess des Bauteils berücksichtigt, damit es nicht zu ungewollten Dichteschwankungen und Geometrieabweichungen im Bauteil kommt. Analog zu den bekannten SLS- oder HSS Verfahren ist es aber auch Teil der Erfindung die jeweils oberste(n) Schicht(en) nach der Schichtablage an- oder aufzuschmelzen, um so eine höhere Dichte schon im schichtaufbauenden Bauprozess zu erreichen.

Es ist erfindungsgemäß vorgesehen, dass die pulverförmige Komponente mit dem höchsten Schmelzpunkt ein anorganisches Salz der Alkalimetalle, ein anorganisches Salz der Erdalkalimetalle oder eine Mischung aus mindestens zwei der vorgenannten Salze ist. Diese Salze sind in hohen Mengen, in ausreichender Reinheit und zu günstigen Preisen erhältlich. Die Salze sind nicht toxisch und zeigen eine hohe Wasserlöslichkeit oder Löslichkeit in wässrigen Säuren. Dies kann das Entfernen der Salze erleichtern. Zudem sind die Wärmeleitfähigkeiten dieser Salze ausreichend hoch, sodass sich hohe Produktionsgeschwindigkeiten unter gleichmäßigen Temperaturprofilen erhalten lassen. Besonders bevorzugt sind Natriumchlorid (NaCl), Kaliumchlorid (KCl) Magnesiumchlorid (MgCh), Calciumchlorid (CaCh), Kaliumcarbonat (K₂CO₃), Lithiumchlorid (LiCl), Magnesiumoxid (MgO), Magnesiumsulfat (MgSO₄) Calciumoxid (CaO), Calciumcarbonat (CaCOs) und Magnesiumfluorid (MgF₂) oder deren Mischungen. Ein weitere Vorteil der Salze besteht darin, dass sie eine höhere Dichte als die Polymere aufweisen und deshalb gut von den unversinterten Polymerpartikeln über Windsichtung zu trennen sind, dass sie in extrem feinen Partikelgrößen einfach und günstig herstellbar und auch unter diesen Bedingungen keine Brennbarkeit aufweisen und keine Staubexplosionen verursachen.

Es ist erfindungsgemäß weiterhin vorgesehen, dass die pulverförmige Komponente mit dem niedrigsten Schmelzpunkt ausgesucht ist aus der Gruppe bestehend aus Polyetheretherketon (PEEK), Polyaryletherketon (PAEK), Polyetherketonketon (PEKK), Polyethersulfone, Polyimid, Polyetherimid, Polyester, Polyamide, Polycarbonate, Polyurethane, Polyvinylchlorid, Polyoxymethylen, Polyvinylacetat, Polyacrylate, Polymethacrylate, Polyethylen, Polypropylen, Polylactid, ABS (Acrylnitril-Butadien-Styrol-Copolymere), PETG (Glycol modifiziertes Polyethylenterephtalat), Polystyrol oder Mischungen aus mindestens zwei der vorgenannten Polymere.

Überraschenderweise hat sich herausgestellt, dass sich diese Materialien für das erfindungsgemäße Verfahren besonders eignen und, insbesondere, dass diese Materialien im Zuge des erfindungsgemäßen Verfahrens zu besonders hohen mechanischen Festigkeiten führen, welche deutlich oberhalb der Festigkeiten liegen, welche üblicherweise mit diesen Materialen in Stand-der-Technik-3D-Druckverfahren erhältlich sind.

Es können Pulvergemische eingesetzt werden. Es ist alternativ möglich, dass das Aufbaumaterial während der Herstellung des Gegenstands mittels des erfindungsgemäßen Verfahrens aus den verschiedenen thermoplastischen Materialien in situ gemischt wird. Vorzugsweise ist in dieser Ausführungsform das Mischungsverhältnis der verschiedenen thermoplastischen Materialien zeitlich beziehungsweise räumlich, in Bezug auf einzelne Lagen oder in Bezug auf einzelne Volumenelemente (Voxel) einer Lage, veränderlich. Dann können Gegenstände mit räumlich variierenden mechanischen Eigenschaften hergestellt werden.

Im Gegensatz zu üblichen Schmelzpolymerblends kann das Verhältnis der physikalisch und chemisch gemischten Polymer-Phasen sehr präzise über die Partikelgrößen und Sintertemperaturen gesteuert werden, so dass Polymerblends mit neuen hochkontrollierten Eigenschaften entstehen, die über klassische Schmelzblends nicht zugänglich sind. Diese über Mischen von kompatiblen grenzflächenreaktiven (gemeint ist die Umurethanisierungsreaktion) Komponenten bevorzugt erhaltenen Eigenschaften sind an der verbesserten Festigkeit, Abriebbeständigkeit und bevorzugt dem linearen Verhältnis der Bruchdehnungen ablesbar. Über gezielte Konditionierung oder die verfahrensbedingte Temperaturbelastung im SLS-Bauraum nahe der Schmelztemperatur der beteiligten Mischphasen können diese Effekte angepasst werden. Bevorzugt erfahren die Mischphasen Temperaturbelastungen von ≥ 50° C, besonders bevorzugt ≥ 40° C und ganz besonders bevorzugt ≥ 30 °C oberhalb der Schmelztemperatur von mindestens 1 Minute, bevorzugt mindestens 3 Minuten, besonders bevorzugt mindestens 20 Minuten und ganz besonders bevorzugt mindestens 30 Minuten.

Vorzugsweise ist das schmelzbare Polymer ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind TDI, MDI, HDI, PDI, H12MDI, IPDI, TODI, XDI, NDI und Decandiisocyanat. Besonders bevorzugte Polyisocyanate sind HDI, PDI, H12MDI, MDI und TDI.

Die Komponente mit dem niedrigsten Schmelzpunkt kann eine Mehrzahl von pulverförmigen thermoplastischen Polyurethan-Materialien umfassen, welche sich voneinander durch ihre Shore-Härte (ermittelt nach DIN ISO 7619-1 Ausgabe 2012-02) unterscheiden. Das Aufbaumaterial kann beispielsweise 2, 3, 4, 5, 6, 7, 8, 9 oder 10 sich in ihrer Shore-Härte unterscheidenden pulverförmigen thermoplastischen Polyurethan-Materialien umfassen. Beispiele für geeignete Gewichtsanteile, jeweils bezogen auf das Gesamtgewicht des Aufbaumaterials und wobei die Summe der Gewichtsanteile ≤ 100 Gewichts-% ergibt.

Für den Fall, dass Polyamide eingesetzt werden, sind PA 6, PA 6.6, PA 6.9, PA 6.12, PA 11, PA 12, PA 4.6, PA 12.12, PA 6.12 und PA 10.10 bevorzugt.

Es können auch vorteilhaft Polycarbonate eingesetzt werden. Gerade die Polycarbonate erfahren durch das erfindungsgemäße Verfahren eine besondere Stabilisierung, welches zu sehr dichten und mechanische belastbaren Bauteilen führen kann. Zudem kann die Oberfläche dieser Bauteile besonders glatt und rissfrei ausgestaltet sein. Es ist bevorzugt, dass das schmelzbare Polymer ein Polycarbonat auf Basis von Bisphenol A und/oder oder Bisphenol TMC ist. Polycarbonat (PC)-Polymere als Material können sowohl Homopolycarbonate als auch Copolycarbonate sein; die Polycarbonate können in bekannter Weise linear oder verzweigt sein. Erfindungsgemäß können auch Mischungen von Polycarbonaten verwendet werden. Die Polycarbonate können aromatische, aliphatische oder gemischt aromatisch/aliphatische Polycarbonat-Polymere sein. Die Herstellung der Polycarbonate erfolgt in bekannter Weise aus Diolen, Kohlensäurederivaten, gegebenenfalls Kettenabbrechern und Verzweigern.

Das Design von Gegenständen kann derart erfolgen, dass Bereiche mit großem zu erwartenden Schrumpf im Designprozess Material-Reservoirs zugewiesen bekommen, die im Schritt b) bevorzugt unter Druck gezielt durch Pulvermaterialnachfluss Bereiche mit starkem Schrumpf auffüllen. Dies lässt sich besonders vorteilhaft in Kombination eines selektiven Pulverauftragsprozesses mit einem Binderjettingverfahren darstellen, bei dem gezielt die Grenzen des nichtschmelzenden Pulvers zum schmelzenden Pulver verfestigt werden.

Es ist möglich, dass die unterste Lage vollständig auf Basis des mindestens einen nicht schmelzenden Materials aufgebaut ist. Es ist auch möglich, dass die oberste Lage vollständig auf Basis des mindestens einen nicht schmelzenden Materials aufgebaut ist. Es ist auch möglich, dass die summierte Dicke der Lagen unter der untersten Lage beinhaltend mindestens ein schmelzendes Material ≥ 1mm, bevorzugt ≥ 2 mm und besonders bevorzugt ≥ 5 mm ist, aber aber bevorzugt ≤ 5 cm ist. Es ist weiterhin möglich, dass die summierte Dicke der Lagen oberhalb der untersten/obersten Lage beinhaltend mindestens ein schmelzendes Material ≥ 1mm, bevorzugt ≥ 2 mm und besonders bevorzugt ≥ 5 mm, aber bevorzugt ≤ 50 cm beträgt.

Vorteilhaft gegenüber den gängigen Pulververfahren erlaubt der erfindungsgemäße Prozess weiterhin den Aufbau von weitgehend geschlossenen Strukturen wie Hohlkugeln etc..., da das verwendete stabilisierende nichtschmelzende Material wasserlöslich oder durch wässrige Säuren löslich sein kann und somit durch selbst kleinste verbleibende Öffnungen als Lösung entfernt werden kann. Dies ist gegenüber dem sonst notwendigen Design größerer Öffnungen sehr vorteilhaft.

Das erfindungsgemäße Verfahren ist ein Verfahren zur additiven Fertigung von Bauteilen. Dabei ist der herzustellende Gegenstand bezüglich seiner Dimensionen und Geometrie nicht grundsätzlich begrenzt. Insbesondere die additive Fertigung erlaubt es in effektiver Weise, verschiedenste Gegenstände für verschiedenste Anwendungen erzeugen zu können und dabei unbegrenzte Geometrien zu erlauben. Entsprechend unterliegt auch der herzustellende Gegenstand keiner Begrenzung, sondern das hier beschriebene Verfahren kann grundsätzlich dazu dienen, jeglichen durch ein additives Verfahren erzeugbaren Gegenstand zu formen. Besonders bevorzugt ist das hier beschriebene Verfahren jedoch für solche Gegenstände, die eine hohe Stabilität beziehungsweise homogene mechanische Eigenschaften benötigen.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Bekannt sind additive Fertigungsverfahren, welche thermoplastische Pulver nutzen, um Gegenstände schichtweise aufzubauen.. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren, wie etwa in EP 1648686 beschrieben, erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Im Verfahrensschritt a) erfolgt ein ein- oder mehrmaliges Ablegen mindestens zweier verschiedener pulverförmiger Komponenten mit einem Unterschied im Schmelzpunkt von ≥ 50 °C auf einem Substrat oder auf eine schon abgelegte Schicht, wobei die pulverförmige Komponente mit dem niedrigsten Schmelzpunkt in der Form des Bauteiles und die pulverförmige Komponente mit dem höchsten Schmelzpunkt als Negativ dazu in einer Schicht abgelegt werden. Der Gegenstand wird also durch ein- oder mehrmaliges schichtweises und entsprechend einem Querschnitt des Gegenstandes räumlich selektives Anordnen mindestens zweier pulverförmigen Materialien auf einem Substrat oder schon abgelegten Schichten erzeugt, wobei die beiden Komponenten einen Schmelzpunktunterschied von ≥ 50 °C, bevorzugt ≥ 100 °C und besonders bevorzugt ≥ 200 °C aufweisen.

Werden mehr als zwei Komponenten eingesetzt, so können beispielsweise zwei Komponenten einen nahebeieinanderliegenden, niedrigeren Schmelzpunkt und eine Komponente einen deutlich höheren Schmelzpunkt aufweisen. Die durchschnittliche Bauraumtemperatur in diesem Verfahrensschritt beträgt bevorzugt ≤ -30 °C, mehr bevorzugt ≤ -50 °C und besonders bevorzugt ≤ 80 °C in Bezug auf die Schmelztemperatur der niedrigst schmelzenden Komponente. Grundsätzlich kann das erste Material in Pulverform auf dem Substrat vorliegen oder auch in bereits geschmolzener Form auf das Substrat aufgebracht werden.

Die Komponente mit dem niedrigeren Schmelzpunkt wird dabei in Form des gewünschten Bauteils und die Komponente mit dem höheren Schmelzpunkt um diese Ablage herum gelegt. Dieses wird bevorzugt sowohl durch ein zeilen- oder voxelbasiertes Verfahren ermöglicht. Es können sowohl zuerst die schmelzende und danach die nicht schmelzende Komponente, als auch zuerst die nicht schmelzende und dann die schmelzende Komponente abgelegt werden.

In einer Variante werden beide Komponenten gleichzeitig abgelegt. In einer weiteren Variante liegt zumindest eines der Pulver als Pulverdispersion vor, wobei während oder vor dem Sinterprozess des Dispergiermittel abfließt bzw. weitgehend verdampft wird. Insofern ergibt sich innerhalb einer Ablageschicht eine räumliche Trennung zwischen beiden Komponenten. Die räumliche Ausdehnung der Komponente mit dem höheren Schmelzpunkt ergibt sich dabei aus den Stellen, an denen nicht die Komponente mit dem niedrigeren Schmelzpunkt abgelegt wird.

Die Komponente mit dem höheren Schmelzpunkt bildet also in der Schicht das "Negativ" der Komponente mit dem niedrigeren Schmelzpunkt. Werden mehrere Komponenten mit unterschiedlichen Schmelzpunkten eingesetzt, bildet immer die Komponente mit dem höchsten Schmelzpunkt in der jeweiligen Schicht die Flächen- und später Volumenbereiche aus, welche nicht das Bauteil bilden.

In einer weiteren Variante kann es auch mehrere hochschmelzende Komponenten geben, die unabhängig voneinander abgelegt werden. Vorzugsweise ist vorgesehen, dass zwischen den erfindungsgemäß schmelzenden Komponenten und den nicht schmelzenden Komponenten einen Schmelzpunktunterschied von mindestens 50 °C besteht, der im erfindungsgemäßen Verfahren im Temperschritt nicht überschritten wird.

Im erfindungsgemäßen Verfahren wird ein Gegenstand schichtweise aufgebaut. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für das schichtweise Auftragen durchgeführt werden.

Geeignete pulverförmige Komponenten können thermoplastische Materialien sein, welche über verschiedene gängige Prozesse wie zum Beispiel Mahlprozesse, Kryo-Mahlen, Fällungsprozesse, Sprühtrocknungsprozesse und andere hergestellt werden können.

Neben dem schmelzbaren Polymer können die Partikel noch weitere Additive wie Füllstoffe, Weichmacher, Pigmente, Farbstoffe, Fasern, Stabilisatoren und dergleichen, aber auch weitere Polymere, enthalten. Der Gesamtgehalt an Additiven in den Partikeln kann beispielsweise ≥ 0,1 Gew.-% bis ≤ 60 Gew.-%, bevorzugt ≥ 1 Gew.-% bis ≤ 40 Gew.-%, betragen.

In einer bevorzugten Ausführungsform können dabei besonders faserförmige Füllstoffe gleichmäßig über eine Schichtlage verteilt werden und somit im Bereich der schmelzenden Bestandteile nach Schritt b) zu faserverstärkten Bauteilen führen, während überschüssige Fasern im Bereich der nicht schmelzenden Bestandteile von diesen durch einfache Siebprozesse getrennt und wiederverwendet werden können.

Wird die Komponente mit dem höchsten Schmelzpunkt in Form eines Pulverbettes eingesetzt, so weisen die Pulverpartikel dieses Materials bevorzugt eine Partikelgröße in einem Bereich von 1 bis 1000 µm, bevorzugt in einem Bereich von 10 bis 2000 µm oder bevorzugt in einem Bereich von 20 bis 500 µm auf. Die Partikelgröße wird durch Laserbeugung mittels statischer Laserbeugungsanalyse nach ISO 13320:2009-10 bestimmt. Ganz besonders bevorzugt enthält die Komponente inerte Partikel, die leicht vom Bauteil entfernt und bevorzugt abgewaschen werden können, weil sie in saurem, basischen und bevorzugt neutralem Wasser bei Temperaturen unterhalb der Schmelztemperatur der Bauteile ausreichend löslich sind.

Wird die Komponente mit dem niedrigsten Schmelzpunkt in Form eines Pulverbettes eingesetzt, so weisen die Pulverpartikel dieses Materials bevorzugt eine Partikelgröße in einem Bereich von 10 bis 5000 µm oder bevorzugt in einem Bereich von 20 bis 2000 µm, oder bevorzugt in einem Bereich von 50 bis 500 µm auf. Die Partikelgröße wird durch Laserbeugung mittels statischer Laserbeugungsanalyse nach ISO 13320:2009-10 bestimmt.

Es ist möglich, dass die mittlere Auflösung der aufgetragenen Materialien als flächiger, bevorzugt mehreckiger, Materialvoxel ≤ 5 cm bevorzugt ≤ 1 cm besonders bevorzugt ≤ 1 mm und ganz besonders bevorzugt ≤ 0,5 mm Durchmesser in der Fläche mit der höchsten Ausdehnung beträgt und ≤ 2 cm bevorzugt ≤ 1 cm, besonders bevorzugt ≤ 1 mm und ganz besonders bevorzugt ≤ 0,5 mm als bevorzugt konvexer Materialvoxel in der Höhe beträgt. Durch diese Schichtungsform wird besonders die Wirkoberfläche zwischen den vertikalen Schichten vergrößert. ≤

In einer Variante wird neben dem voxelgenauen Auftrag der Pulverpartikel über eine Walze und/oder andere Flächenpresse das Bauvolumen und besonders die oberste Bauschicht regelmäßig bevorzugt nach jedem Schichtauftrag zusätzlich verdichtet.

In einer weiteren Variante ist die Auflösung der Materialvoxel für die Komponente mit dem höheren Schmelzpunkt höher als die Auflösung der Materialvoxel für die Komponente mit dem niedrigeren Schmelzpunkt. Dies ist besonders vorteilhaft möglich, da eine höhere Dichte und eine bevorzugt nichtbrennbare und nichttoxische Zusammensetzung der Materialien der nichtschmelzenden Schicht kleinere Partikelvoxel erlaubt. Dies ohne die Gefahr einer Pulverexplosion und/oder Pulverkonzentration in der Atmosphäre beim Schichtaufbau und/oder bei der Freilegung der Produkte und dem Pulverhandling zu vergrößern.

Durch die besondere Ausführungsform und die voxelgenaue Ablage von Materialien, werden in einer besonderen Ausführungsform der Erfindung auch Füllstoffe gezielt mit schmelzbaren Materialien vermischt, welche von diesen in Schritt b) anteilig umschlossen werden und so verstärkend wirken.

In einer weiteren Variante handelt es sich bei den Füllstoffen um Füllstoffe mit einem Aspektverhältnis ≥ 10 bevorzugt ≥ 50 also faserförmige Füllstoffe. Die Füllstoffe können auch schon vorformulierter Teil der partikulären schmelzenden Pulvermaterialien sein.

In einer weiteren Variante können so auch Flüssigkeiten wie zum Beispiel Weichmacher und Verlaufshilfsmittel der Pulverablage voxelgenau gezielt zugeführt werden um entweder Eigenschaften lokal zu modifizieren oder Trennebenen zu schaffen.

Der Einsatz des erfindungsgemäßen Verfahrens in Kombination mit einem Binderjetting Prozess bei dem zusätzlich ein Bindemittel zur Verstärkung der Strukturen der zu versinternden Bauteilmaterialien und/oder der nicht zu versinternden Bauteilmaterialien zugegeben werden ist ebenfalls möglich. In einer bevorzugten Ausführungsform ist dabei das Bindermaterial für die nicht schmelzende Komponente so beschaffen, das nach Schritt b) das Bindermaterial durch mechanisches Brechen zum Beispiel in einer Walze oder einer Mühle wiedergewonnen werden kann. Dies ist zum Beispiel durch die Kombination von NaCl und Wasser gegeben.

Als potentiell voxelgenaue schichtend arbeitende Verfahren zum Verdrucken von Pulver und/oder Pulverdispersionen seien genannt: Nadelrohr, Laserjet- oder Lasertrommel, Siebdruck, Pulversuspensionsdruck und andere Verfahren, welche mit voxelgenauer Ablage pulveriger Materialien arbeiten.

Im Verfahrensschritt b) erfolgt ein Hitzebehandeln der Pulverschichtung auf eine Temperatur oberhalb des Schmelzpunkts der Komponente mit dem niedrigsten Schmelzpunkt und unterhalb des Schmelzpunktes der Komponente mit dem höchsten Schmelzpunkt, wobei die Pulverbestandteile der Komponente mit dem niedrigeren Schmelzpunkt auf- und zumindest partiell zusammengeschmolzen werden.

Der Verfahrensschritt b) kann dabei am selben oder aber an einem anderen Ort als der Verfahrensschritt a) durchgeführt werden. Hitzebehandlung der Pulverschichtung beinhaltet dabei eine Erhöhung der Temperatur von Teilen oder des gesamten Schichtaufbaus. Dieser Temperaturanstieg kann dabei durch übliche Wärmequelle induziert werden. Es ist möglich, die Komponenten direkt über Kontakt zu einer Wärmequelle oder indirekt über das Einblasen erhitzter Gase zu erwärmen. Durch den Temperaturanstieg wird die Komponente mit dem niedrigeren Schmelzpunkt zumindest zum Teil plastifiziert und aufgeschmolzen, sodass sich einzelne Partikel der Komponente mit dem niedrigeren Schmelzpunkt miteinander unter Ausbildung eines zumindest teils kohärenten Bauteils verbinden.

Während dieses Prozessschrittes wird die Komponente mit dem niedrigeren Schmelzpunkt über die Komponente mit dem höheren Schmelzpunkt mechanisch in der Schichtung stabilisiert. Zudem kann die Wärmeleitfähigkeit, wie oben dargestellt, durch die Anwesenheit der Komponente mit dem höheren Schmelzpunkt deutlich verbessert werden. Die Pulverschichtung wird also getempert, wobei beim Tempern die Temperatur der erzeugten Pulverschichtung mindestens ≥ 5 °C, bevorzugt mindestens ≥ 10 °C und ganz besonders bevorzugt mindestens ≥ 20 °C und ganz besonders bevorzugt ≥ 30 °C der Schmelztemperatur der am niedrigsten schmelzenden Komponente der Pulvermischung beträgt. Vorzugsweise liegt die Temperatur in diesem Schritt mindestens unterhalb von -50 °C des Schmelzpunktes der am höchsten schmelzenden Komponente der Pulvermischung. Innerhalb dieser thermischen Ausgestaltung können besonders mechanisch homogene Bauteile mit verbesserten mechanischen Eigenschaften erhalten werden.

Weiter bevorzugt kann es für eine effektive Behandlung des Gegenstands vorgesehen sein, dass das Kontaktieren des erhaltenen Gegenstands mit dem Pulverbett gemäß Verfahrensschritt b) für einen Zeitraum durchgeführt wird, der in einem Bereich liegt von ≥ 1 Minuten bis ≤ 168 Stunden liegt. Weiter bevorzugt kann es vorgesehen sein, dass das Kontaktieren des erhaltenen Gegenstands mit dem Pulverbett gemäß Verfahrensschritt b) für einen Zeitraum durchgeführt wird, der in einem Bereich liegt von ≥ 10 Minuten bis ≤ 48 Stunden liegt, weiter bevorzugt in einem Bereich liegt von ≥ 15 Minuten bis ≤ 24 Stunden liegt, weiter bevorzugt in einem Bereich liegt von ≥ 20 Minuten bis ≤ 8 Stunden liegt.

Weiter ist bevorzugt, dass zwischen Abschluss von Verfahrensschritt a) und Start b) mindestens 1 Minute liegt.

Weiter ist bevorzugt, dass der Abstand zwischen dem Ort wo Schritt a) ausgeführt wird und dem Ort, an dem Schritt b) ausgeführt wird, mindestens 1 m beträgt.

Beispielsweise bei den vorstehend beschriebenen Zeitdauern, insbesondere bei einer Behandlungsdauer von ≥ 1 Minute bis ≤ 72 Stunden, der Behandlung des Gegenstands bei Verfahrensschritt b) kann es ferner vorgesehen sein, dass sich die Temperatur T des Pulverbetts bevorzugt im Laufe des Verfahrensschritts b) verändert und die Temperaturkurve gegebenenfalls Temperaturen von -190 °C bis +2000 °C umfassen kann. Dies kann eine besonders adaptive Behandlung ermöglichen, wobei auf während der Behandlung sich verändernde Eigenschaften des Gegenstands reagiert werden kann beziehungsweise diese in Betracht gezogen werden können.

In einer weiteren bevorzugten Ausführungsform beträgt die Temperatur T wenn die Komponente mit dem niedrigeren Schmelzpunkt einen Binder aufweist, ≤ 95%, bevorzugt ≤ 90%, mehr bevorzugt ≤ 85%, der Zersetzungstemperatur des Bindemittels nach Vernetzung, wobei die Zersetzungstemperatur definiert ist als die Temperatur, bei der ein Massenverlust von ≥ 10% in einer thermogravimetrischen Analyse bei einer Heizrate von 20 °C/min im Stickstoffstrom festgestellt wird. In dieser Ausgestaltung kann wiederum ein effektives und gleichzeitig schonendes Behandeln des Gegenstands ermöglichen.

In einer besonderen Ausführungsform kann die Wahl des Temperprozesses und der Temperaturführung des Temperprozesses beliebige Temperaturzyklen aufweisen. Auf diese Weise können gezielt Kristallisations- und Schmelzprozesse besonders auch Glasübergangsprozesse gesteuert werden um die Eigenschaften des additiv gesinterten Bauteils in einer gewünschten Weise zu verändern. Gewünschte Eigenschaften können dabei sein, Kristallitgröße, Dichte, Kristallisationsgrad, Härte, Festigkeit, Zugdehnung, Abriebsbeständigkeit, Transparenz und andere.

Im Verfahrensschritt c) erfolgt das Abkühlen der hitzebehandelten Pulverschichtung aus Schritt b) auf eine Temperatur unterhalb des Schmelzpunkt der am niedrigsten schmelzenden Komponente. Nach Beendigung des Sinterprozesses erfolgt ein Abkühlen der Pulverschichtung, welches in der einfachsten Ausgestaltung durch Abschalten oder Entfernen der Wärmequellen erfolgen kann. Es ist aber auch möglich, die Pulverschichtung aktiv abzukühlen. Das Abkühlen der erzeugten teilgesinterten Pulverschichtung kann auf eine Temperatur erfolgen, welche mindestens ≤ -5 °C, bevorzugt mindestens ≤ -10 °C und ganz besonders bevorzugt mindestens ≤ -20 °C und ganz besonders bevorzugt ≤ wenigstens -30 °C unterhalb der Schmelztemperatur der am niedrigsten schmelzenden Komponente liegt. Das Abkühlen der Pulvermischung kann innerhalb eines Zeitraums ≥ 30 sec. und ≤ 168 h erfolgen. Zeitdauer und Temperatur sind dabei so zu wählen, dass zumindest ein Teil der aufgeschmolzenen/plastifizierten Komponente wieder erstarrt, und die Abkühlbedingungen mit den Anforderungen des Materials korrespondieren.

Im Verfahrensschritt d) erfolgt ein Entfernen der nicht zusammengeschmolzenen pulverförmigen Komponenten unter Erhalt des Bauteils. Nach Erhalt des Gegenstands, beziehungsweise nach Verfahrensschritt c), kann dieser aus dem Pulverbett und gegebenenfalls ferner von der Komponente mit dem höheren Schmelzpunkt oder nicht geschmolzenen Anteilen der Komponente mit dem niedrigeren Schmelzpunkt gelöst werden. Der Gegenstand kann von Pulverrückständen mittels üblicher Methoden wie Bürsten, Abwaschen oder Pressluft befreit werden. Bevorzugt kann es vorgesehen sein, dass das Verfahren mindestens einen weiteren Verfahrensschritt oder eine Kombination von weiteren Verfahrensschritten aufweist, ausgewählt aus:
- teilweises mechanisches Entfernen des inerten Materials von dem Gegenstand während oder nach dem Tempern beispielsweise mittels Abfiltrieren, Wegblasen, Absaugen, Abrütteln, Abschleudern oder einer Kombination aus mindestens zwei hiervon; und
- Abwaschen des inerten Materials nach dem Tempern nach Entnahme des Gegenstands aus dem Pulver mit einem Lösungsmittel, wobei das Lösungsmittel kein Lösungsmittel oder Reaktionspartner für die Komponente mit dem niedrigeren Schmelzpunkt ist und das Abwaschen bei einer Temperatur in einem Bereich von T ≤ 200 °C , insbesondere in einem Bereich von ≤ 150 °C, bevorzugt in einem Bereich von ≤ 100 °C, weiter bevorzugt in einem Bereich von ≤ 60 °C, weiter bevorzugt in einem Bereich von ≤ 40 °C, weiter bevorzugt in einem Bereich von ≤ 20 °C, unterhalb des Schmelzpunktes der Komponente mit dem niedrigeren Schmelzpunkt erfolgt. Der Zeitraum kann bevorzugt ≤ 30 min, insbesondere ≤ 25 min, bevorzugt ≤ 20 min, weiter bevorzugt ≤ 15 min, weiter bevorzugt ≤ 10 min, weiter bevorzugt ≤ 5 min betragen. Bevorzugt beträgt der Zeitraum ≥ 1 Sekunde bis ≤ 30 min, oder bevorzugt ≥ 10 Sekunde bis ≤ 20 min.

Bei dem Abwaschen wird die Komponente mit dem höheren Schmelzpunkt bevorzugt in einem oder mehreren Waschschritten zu mehr als 90 %, bevorzugt zu mehr als 95 %, bevorzugt zu mehr als 99 %, von der Gesamtoberfläche des Bauteiles entfernt. Dabei wird ein Pulverbelegung von einer durchgehenden Partikelschicht auf der Bauteiloberfläche als Startpunkt der Messung definiert. Die Pulverbelegung kann zum Beispiel einfach optisch über ein Oberflächen IR oder eine Mikroskopieaufnahmen ausgezählt bzw. Quantifiziert werden.

Insgesamt kann dieser Verfahrensschritt das Entnehmen der gesinterten Bestandteile aus der teilgesinterten Pulverschichtung und ein mechanisches und/oder chemisches Entfernen von ≥ 60 Gew.% bevorzugt ≥ 70 Gew.% und ganz besonders bevorzugt ≥ 80 Gew.% der nichtgesinterten Bestandteile aufweisen.

In einer weiteren bevorzugten Ausgestaltung des Verfahrens weisen 90 Gew.-% der Partikel der pulverförmigen Komponente mit dem niedrigsten Schmelzpunkt einen Teilchendurchmesser gemessen nach ISO 13320:2009-10 von ≤ 0,25 mm auf. Innerhalb dieser Partikelgrößenverteilung können besonders homogene Bauteile mit filigranen Oberflächenstrukturen aus der Komponente mit dem niedrigeren Schmelzpunkt erhalten werden. Die Teilchengröße ermöglicht einen gleichmäßigen Sinterprozess und es wird ein Einschluss oder ein Eindiffundieren der Komponente mit dem höheren Schmelzpunkt effizient vermieden. Besonders bevorzugt kann der Teilchendurchmesser 90 Gew.-% der Partikel der ≤ 0,2 mm, des Weiteren bevorzug ≤ 0,1 mm betragen.

In einer weiteren bevorzugten Ausführungsform des Verfahrens beträgt das Verhältnis des mittleren Teilchendurchmessers der pulverförmigen Komponente mit dem niedrigeren Schmelzpunkt zum mittleren Teilchendurchmessers der pulverförmigen Komponente mit dem höheren Schmelzpunkt, berechnet aus D_{niedrig}/D_{hoch}, ≥ 1 und ≤ 10. Dieses Verhältnis beider Partikelgrößen hat sich im erfindungsgemäßen Prozess als besonders geeignet herausgestellt. Das Verhältnis verhindert einen Einbau der Komponente mit dem höheren Schmelzpunkt in das Bauteil, führt aber zu einer effektiven mechanischen Stabilisierung der Bauteiloberfläche, da die Pulverpartikel der Komponente mit dem höheren Schmelzpunkt kleiner ist und näher an die Bauteiloberfläche aus der Komponente mit dem niedrigeren Schmelzpunkt heranreicht. Das Verhältnis der Partikelgrößen führt zudem zu einer homogenen Temperaturverteilung und einem schnellen Aufheiz- sowie Abkühlverhalten. Die Teilchengrößen können nach ISO 13320:2009-10 bestimmt werden.

In einem bevorzugten Aspekt des Verfahrens erfolgt die Hitzebehandlung im Schritt b) bei einem Druckunterschied von ≥ 25 kPa bezogen auf Normaldruck. Das erfindungsgemäße Verfahren ist so flexibel, dass es auch unter Druck durchgeführt werden kann. Der Druck kann dabei bevorzugt über eine mechanische Komprimierung der Pulver erreicht werden. Dadurch kann ein Verzug der Bauteile beim Abkühlprozess wirksam verhindert werden. Bevorzugte Drücke die auf den gesinterten Stütz- und Bauteilkuchen wirken sind dabei ≥ 0,5 bar und ganz besonders bevorzugt ≥ 1 bar und ≤ 50 bar und bevorzugt ≤ 20 bar und ganz besonders bevorzugt ≤ 10 bar, da bei zu hohen Drücken die Gefahr besteht, das Stützmaterial und Polymer zu Anfang des Abkühlprozesses durch den Druck miteinander verschmolzen werden.

In einer weiteren bevorzugten Ausführungsform ist dabei das eingesetzte Gas ein Inertgas. Dieses Inertgas wirkt bei der gewählten Behandlungstemperatur weder oxidierend noch reduzierend. Bevorzugte Inertgase sind dabei CO₂, N₂, Argon und Neon.

In einer weiteren bevorzugten Ausführungsform wird im Verfahrensschritt b) das Pulverbett wenigstens zeitweise unter Überdruck gesetzt. Bevorzugt liegt der relative Druck, also der Überdruck, in einem Bereich von ≥ 1 bar bis ≤ 1000 bar, insbesondere bei ≥ 1,5bar bis ≤ 200 bar, bevorzugt bei ≥ 2 bar bis ≤ 50 bar, besonders bevorzugt bei ≥ 2,5 bar bis ≤ 20 bar und ganz besonders bevorzugt bei ≥ 4 bar bis ≤ 10 bar. Der Druckaufschlag kann dabei in geeigneten Autoklaven aus Glas oder Metall durchgeführt werden mittels Aufpressen eines geeigneten Gases oder durch mechanische Verringerung des Autoklavenvolumens. Beim Beaufschlagen des Pulverbetts mit Überdruck kann die Temperatur des Pulverbetts gegenüber Verfahrensvarianten ohne Druckbeaufschlagung gesenkt werden, beispielsweise um ≥ 5 °C oder ≥ 10 °C.

Es kann weiterhin bevorzugt sein, dass gemäß Verfahrensschritt b) das Pulverbett wenigstens zeitweise unter Unterdruck beziehungsweise unter Vakuum gesetzt. Bevorzugt liegt der relative Druck, also der Unterdruck, in einem Bereich von ≥ 1 bar bis ≤ 0,01 bar, insbesondere bei ≥ 0,9bar bis ≤ 0,03 bar, bevorzugt bei ≥ 0,8 bar bis ≤ 0,05 bar, besonders bevorzugt bei ≥ 0,7 bar bis ≤ 0,08 bar. Der Vakuumaufschlag kann dabei in geeigneten Autoklaven aus Glas oder Metall durchgeführt werden mittels Entfernen des im Autoklaven befindlichen geeigneten Gases oder durch mechanische Vergrößerung des Autoklavenvolumens. Beim Beaufschlagen der Flüssigkeit oder des Pulverbetts mit Unterdruck kann die Temperatur der Flüssigkeit oder des Pulverbetts gegenüber Verfahrensvarianten ohne Druckbeaufschlagung gesenkt werden, beispielsweise um ≥ 5 °C oder ≥ 10 °C.

In einer weiteren, bevorzugten Ausführungsform des Verfahrens wird vor der Hitzebehandlung im Verfahrensschritt b) die Pulverschichtung mit einem Inertgas beaufschlagt. Der Einsatz von Inertgas kann beispielsweise ungewollten Abbauprozessen entgegenwirken. Unter einem Inertgas kann dabei insbesondere ein derartiges Gas verstanden werden, das mit dem Material des Gegenstands und mit dem Material des Pulverbetts nicht reagiert. Insbesondere soll das Gas derartig ausgestaltet sein, dass es bezüglich des Materials oder der Materialien des Gegenstands und des Pulverbetts keine oxidierenden Eigenschaften aufweist. Inertgas kann besonders bevorzugt ausgewählt sein aus der Gruppe bestehend aus Helium (He), Argon (Ar), Stickstoff (N₂) und Kohlendioxid (CO₂).

In einer bevorzugten Ausführungsform des Verfahrens liegt die mittlere Temperatur im Verfahrensschritt b) bezogen auf die mittlere Temperatur im Verfahrensschritt a) um ≥ 20 °C höher. Es hat sich weiterhin als Vorteilhaft herausgestellt, dass sich die Temperaturen in den Verfahrensschritten a) und b) sich nicht zu stark unterscheiden. Dies kann den Prozess der Herstellung als solchen beschleunigen, da auf ein langwieriges Aufheizen verzichtet werden kann. Zudem können sich durch die geringen Temperaturunterschiede Aufschmelzprozesse im Gleichgewicht ergeben, welche zu einer besonders homogenen Oberfläche und besonders homogenen mechanischen Eigenschaften des Bauteils beitragen können. Bevorzugt liegt die Temperatur um ≥ 30 °C, 40 °C, 50 °C, 100 °C höher.

In einer weiteren bevorzugten Ausführungsform des Verfahrens werden mindestens 3 pulverförmige Komponenten eingesetzt, wobei mindestens 2 der 3 pulverförmigen Komponenten Polyurethane mit einer Shore-Härte ermittelt nach DIN ISO 7619-1:2012 von ≥ 40A bis ≤ 90D umfassen und die Differenz der Shore-Härten zwischen den 3 pulverförmigen Komponenten ≥ 2A bis ≤ 40A beträgt. Zur besonderen Feineinstellung der mechanischen Eigenschaften der Bauteile hat sich der Einsatz von Mischungen unterschiedlicher Härte als Komponente mit dem niedrigeren Schmelzpunkt als besonders geeignet erweisen.

In dieser Ausführungsform umfasst die Komponente mit dem niedrigeren Schmelzpunkt ein erstes pulverförmiges thermoplastisches Material und ein zweites pulverförmiges thermoplastisches Material, wobei das erste pulverförmige thermoplastische Material ein erstes Polyurethan-Material und das zweite pulverförmige thermoplastische Material ein zweites Polyurethan-Material, ein Polycarbonat-Material, ein Polyester-Material oder ein Polyamid-Material ist. Es ist in dieser Ausführungsform bevorzugt, dass das erste pulverförmige thermoplastische Material in einer Menge von ≥ 40 Gewichts-%, bezogen auf das Gesamtgewicht des Aufbaumaterials, vorliegt.

Thermoplastische Polyurethane haben im Fall des Einsatzes eines ersten und eines zweiten Polyurethan-Materials den Vorteil, dass Materialien in einem vergleichsweise kleinen Fenster der Verarbeitungsbedingungen, insbesondere der Verarbeitungstemperatur, eine große Bandbreite an mechanischen und/oder chemischen Eigenschaften zur Verfügung steht. So lassen sich unterschiedliche thermoplastische Polyurethane mit eine Shore-Härte (DIN ISO 7619-1) von ≥ 40A bis ≤ 90D in einem Temperaturbereich von ≥ 180 °C bis ≤ 260 °C gemeinsam verarbeiten, wobei das nach dem Aufschmelzen und Abkühlen erhaltene Material bevorzugt eine Shore-Härte aufweist, welche zwischen der größten und der kleinsten Härte der eingesetzten Polyurethane liegt und/oder eine Reißdehnung aufweist, welche zwischen der größten und der kleinsten Reißdehnung der eingesetzten Polyurethane liegt.

Dies ermöglicht eine feine Abstimmung der Polyurethaneigenschaften, welche auch im herzustellenden Gegenstand selbst räumlich variieren können. Bedingt durch die chemische Kompatibilität der Polyurethane untereinander lässt sich im erfindungsgemäßen Verfahren das aufgeschmolzene und wieder abgekühlte Aufbaumaterial wenigstens an der Partikelgrenzfläche als ein Polymerblend charakterisieren, der sich von klassischen Polymerblends insofern unterscheidet, dass zwischen den Partikeln Grenzbereiche entstehen, die sich nicht nur physikalisch als Mischung, sondern auch chemisch von den Materialien im Inneren der eingesetzten Partikel unterscheiden. In Polyurethanen als Vertreter der Additionspolymere können bei den eingesetzten Verarbeitungstemperaturen sich Urethangruppen reversibel öffnen und Umurethanisierungen auftreten.

Wenn beispielsweise zwei nebeneinander liegende Partikel aufgeschmolzen werden und das eine Partikel aus einem ersten Polyurethan auf der Basis eines ersten Isocyanats und eines ersten Polyols aufgebaut ist und das andere Partikel aus einem zweiten Polyurethan auf der Basis eines zweiten Isocyanats und eines zweiten Polyols aufgebaut ist, können durch Umurethanisierungen in der Kontaktzone auch Polyurethane auf der Basis des ersten Isocyanats und des zweiten Polyols sowie auf der Basis des zweiten Isocyanats und des ersten Polyols vorliegen.

In einer weiteren bevorzugten Ausführungsform umfasst das Aufbaumaterial ein erstes pulverförmiges thermoplastisches Polyurethan-Material und ein zweites pulverförmiges thermoplastisches Polyurethan-Material, wobei das erste pulverförmige thermoplastische Polyurethan-Material eine Shore-Härte (DIN ISO 7619-1) von ≥ 40A bis ≤ 90D aufweist, das zweite pulverförmige thermoplastische Polyurethan-Material eine Shore-Härte (DIN ISO 7619-1) von ≥ 40A bis ≤ 90D aufweist und die Differenz der Shore-Härten zwischen erstem und zweitem pulverförmigen thermoplastischen Polyurethan-Material ≥ 2A bis ≤ 40A und/oder ≥ 2D bis ≤ 60D beträgt.

Ein Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 70 A bis ≤ 80A und ein zweites pulverförmiges thermoplastisches Polyurethan-Material mit einer Shore-Härte (DIN ISO 7619-1) von ≥ 85A bis ≤ 95A. Die Differenz der Shore-Härten zwischen erstem und zweitem pulverförmigen thermoplastischen Polyurethan-Material beträgt ≥ 5A bis ≤ 25A.

Ein weiteres Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 60A bis ≤ 70A und ein zweites pulverförmiges thermoplastisches Polyurethan-Material mit einer Shore-Härte (DIN ISO 7619-1) von ≥ 80A bis ≤ 90A. Die Differenz der Shore-Härten zwischen erstem und zweitem pulverförmigen thermoplastischen Polyurethan-Material beträgt ≥ 10A bis ≤ 20A.

In einer weiteren bevorzugten Ausführungsform umfasst das Aufbaumaterial ein erstes pulverförmiges thermoplastisches Polyurethan-Material, ein zweites pulverförmiges thermoplastisches Polyurethan-Material und ein drittes pulverförmiges thermoplastisches Polyurethan-Material, wobei das erste pulverförmige thermoplastische Polyurethan-Material eine Shore-Härte (DIN ISO 7619-1) von ≥ 40A bis ≤ 90D aufweist, das zweite pulverförmige thermoplastische Polyurethan-Material eine Shore-Härte (DIN ISO 7619-1) von ≥ 40A bis ≤ 90D aufweist, das dritte pulverförmige thermoplastische Polyurethan-Material eine Shore-Härte (DIN ISO 7619-1) von ≥ 40A bis ≤ 90 aufweist, die Differenz der Shore-Härten zwischen erstem und zweitem pulverförmigen thermoplastischen Polyurethan-Material > 2A bis ≤ 40A und/oder ≥ 2D bis ≤ 60D beträgt und die Differenz der Shore-Härten zwischen zweitem und dritten pulverförmigen thermoplastischen Polyurethan-Material ≥ 2A bis ≤ 40A und/oder ≥ 2D bis ≤ 60D beträgt.

Ein Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 60A bis ≤ 70A, ein zweites pulverförmiges thermoplastisches Polyurethan-Material mit einer Shore-Härte (DIN ISO 7619-1) von ≥ 75A bis ≤ 85A und ein drittes pulverförmiges thermoplastisches Polyurethan-Material mit einer Shore-Härte (DIN ISO 7619-1) von ≥ 90A bis ≤ 90D. Die Differenz der Shore-Härten zwischen erstem und zweitem pulverförmigen thermoplastischen Polyurethan-Material beträgt ≥ 2A bis ≤ 40A und die Differenz der Shore-Härten zwischen zweitem und drittem pulverförmigen thermoplastischen Polyurethan-Material beträgt ≥ 2A bis ≤ 60D.

Ein weiteres Beispiel für solch ein erfindungsgemäß geeignetes Aufbaumaterial umfasst ein erstes pulverförmiges thermoplastisches Polyurethan-Material mit einer Shore-Härte (DIN ISO 7619-1) von ≥ 60A bis ≤ 65A, ein zweites pulverförmiges thermoplastisches Polyurethan-Material mit einer Shore-Härte (DIN ISO 7619-1) von ≥ 70A bis ≤ 75A und ein drittes pulverförmiges thermoplastisches Polyurethan-Material mit einer Shore-Härte (DIN ISO 7619-1) von ≥ 80A bis ≤ 90A. Die Differenz der Shore-Härten zwischen erstem und zweitem pulverförmigen thermoplastischen Polyurethan-Material beträgt ≥ 5A bis ≤ 15A und die Differenz der Shore-Härten zwischen zweitem und drittem pulverförmigen thermoplastischen Polyurethan-Material beträgt ≥ 5Abis ≤ 15A.

Innerhalb eine bevorzugten Ausgestaltung des Verfahrens werden mindestens 3 pulverförmige Komponenten eingesetzt, wobei mindestens 2 der 3 pulverförmigen Komponenten Polyurethane mit einer Shore-Härte ermittelt nach DIN ISO 7619-1:2012 von ≥ 40A bis ≤ 90D umfassen und die Differenz der Shore-Härten zwischen den pulverförmigen Komponenten ≥ 2A bis ≤ 40A beträgt und mindestens eine pulverförmige Komponente einen Schmelzpunkt von ≥ 50 °C oberhalb der Schmelzpunkte der anderen pulverförmigen Komponenten aufweist. Diese Kombination aus mechanischen und thermischen Eigenschaften der unterschiedlichen Komponenten kann zu einem besonders gleichmäßigen Sinterergebnis und somit zu besonders isotropen mechanischen Eigenschaften des Bauteils beitragen.

In einer weiteren bevorzugten Ausführungsform des Verfahrens erfolgt das Ablegen der pulverförmigen Komponenten in Verfahrensschritt a) über ein ortsselektives Ablageverfahren aus der Gruppe bestehend aus Pulversiebdruck, Pulversuspensionssiebdruck, elektrostatische Walzen- oder Platten-Pulverablageverfahren, Pulverjetting, Pulverdispensing, Pulversuspensionsdruck, oder Kombinationen aus mindestens zwei Verfahren daraus. Diese Verfahren sind in der Lage, unterschiedliche Pulverquellen handzuhaben und können des Weiteren die geforderte Genauigkeit zum Erhalt hochpräzisier Bauteile aufbringen.

In einer bevorzugten Ausgestaltung des Verfahrens wird mindestens eines der niedrigschmelzenden Pulver in Schritt a) über eine thermische Aktivierung selektiv aufgeschmolzen. In dieser Ausführungsform kann die Herstellung des Gegenstands über die Schritte erfolgen:
- Auftragen einer Schicht aus das Aufbaumaterial aufweisenden Partikeln auf eine Zielfläche;
- Einwirken von Energie auf einen ausgewählten Teil der Schicht, entsprechend einem Querschnitt des Gegenstandes, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Einwirken von Energie durchgeführt werden. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform dieses Verfahren ist wenigstens eines der thermoplastischen Materialien in dem Aufbaumaterial ein thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 15 °C aufweist. Insbesondere kann die Polyolkomponente ein Polyesterpolyol aufweisen, welches einen Stockpunkt (No Flow Point, ASTM D5985) von ≥ 25 °C bis ≤ 90 °C, vorzugsweise ≥ 35 °C bis ≤ 80 °C, weiter bevorzugt ≥ 35 °C bis ≤ 55 °C aufweist. Zur Bestimmung des Stockpunkts wird ein Messgefäß mit der Probe in eine langsame Rotation (0,1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen alpha, omega-C4-bis C10- Dicarbonsäuren mit einem oder mehreren C2- bis C10-Diolen. Sie weisen bevorzugt ein zahlenmittleres Molekulargewicht Mn von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI oder 4,4'-MDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane. Bevorzugte Polyesterpolyole sind weiter durch ringöffnende Lactonpolymerisation erhältlich, besonders bevorzugt auf Basis von Epsiloncaprolacton.

Es ist ferner bevorzugt, dass diese Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als weiteres Beispiel angeführt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht Mₙ (GPC, gegen Polystyrol-Standards) von ≥ 4000 g/mol bis ≤6000 g/mol aufweist. Solch ein Polyurethan kann einen Betrag der komplexen Viskosität |η ^{∗}| (bestimmt durch Viskosimetriemessung in der Schmelze mit einem Platte/Platte-Oszillationsviskosimeter gemäß ISO 6721-10 bei 100 °C und einer Scherrate von 1/s) von ≥ 4000 Pas bis ≤ 160000 Pas aufweisen.

In einer bevorzugten Ausführungsform des Verfahrens ist mindestens eines der niedrigschmelzenden Pulver in Schritt a) farbig oder wird während des Ablageprozesses in Schritt a) selektiv eingefärbt. Das erfindungsgemäßen Verfahren ermöglicht es zudem, das Bauteil insgesamt oder auch nur partiell einzufärben, wobei die einzelnen Komponenten farblos sein können. Dies kann die Flexibilität des Verfahrens erhöhen und aus einem Grundmaterial ist die Herstellung einer Vielzahl an kundenindividuellen Bauteilen möglich.

Innerhalb eines bevorzugten Aspektes des Verfahrens handelt es sich bei dem oder mindestens einem der niedrigschmelzenden Pulver um ein Reaktivpulver, welches im Verfahrensschritt b) zur Reaktion gebracht wird. Zur Reaktion bringen bedeutet in diesem Zusammenhang, dass sich das molekulare Gefüge der Polymere unter Verlängerung oder Vergrößerung der Polymerkette ändert. Es werden Kombination aus den Komponenten erhalten, welche sich bezüglich ihrer mechanischen Eigenschaften deutlich anders verhalten können als die einzelnen Polymere. Somit lassen sich besonders die Elastizität und die mechanische Festigkeit der Bauteile Beeinflussen. Das zur Reaktion beringen kann dabei über unterschiedliche Ursachen, wie beispielsweise Temperatur oder andere chemische wie physikalische Initiatoren gesteuert werden. So sind neben Polyadditionsreaktionen, Polykondensationsreaktionen auch Polymerisationsreaktionen beispielsweise radikalische Polymerisationsreaktionen über einen Radikalstarter oder auch lichtindizierte Reaktionen denkbar.

In einer weiteren bevorzugten Ausführungsform umfasst das Aufbaumaterial eine Mehrzahl von pulverförmigen thermoplastischen Polyurethan-Materialien, welche sich voneinander durch ihre Reißdehnung (DIN 53504, 200 mm/min) unterscheiden. Das Aufbaumaterial kann beispielsweise 2, 3, 4, 5, 6, 7, 8, 9 oder 10 sich in ihrer Reißdehnung unterscheidenden thermoplastischen Polyurethan-Materialien umfassen.

In einer weiteren bevorzugten Ausführungsform umfasst das Aufbaumaterial ein erstes pulverförmiges thermoplastisches Polyurethan-Material und ein zweites pulverförmiges thermoplastisches Polyurethan-Material, wobei das erste pulverförmige thermoplastische Polyurethan-Material eine Reißdehnung (DIN 53504, 200 mm/min) von ≥ 200% bis ≤ 800% aufweist, das zweite pulverförmige thermoplastische Polyurethan-Material eine Reißdehnung (DIN 53504, 200 mm/min) von ≥ 100% bis ≤ 400% aufweist und die Differenz der Reißdehnungen zwischen erstem und zweitem pulverförmigen thermoplastischen Polyurethan-Material ≥ 50 Prozentpunkte bis ≤ 700 Prozentpunkte beträgt.

Ein Beispiel für solch ein erfindungsgemäß geeignetes Aufbaumaterial umfasst ein erstes pulverförmiges thermoplastische Polyurethan-Material mit einer Reißdehnung (DIN 53504:2017-03, 200 mm/min) von ≥ 300% bis ≤ 500% und ein zweites pulverförmiges thermoplastische Polyurethan- Material mit einer Reißdehnung (DIN 53504, 200 mm/min) von ≥ 100% bis ≤ 400%. Die Differenz der Reißdehnungen zwischen erstem und zweitem pulverförmigen thermoplastischen Polyurethan- Material beträgt ≥ 50 Prozentpunkte bis ≤ 400 Prozentpunkte.

Ein weiteres Beispiel für solch ein erfindungsgemäß geeignetes Aufbaumaterial umfasst ein erstes pulverförmiges thermoplastische Polyurethan-Material mit einer Reißdehnung (DIN 53504, 200 mm/min) von ≥ 150% bis ≤ 250% und ein zweites pulverförmiges thermoplastische Polyurethan-Material mit einer Reißdehnung (DIN 53504, 200 mm/min) von ≥ 200% bis ≤ 450%. Die Differenz der Reißdehnungen zwischen erstem und zweitem pulverförmigen thermoplastischen Polyurethan-Material beträgt ≥ 50 Prozentpunkte bis ≤ 300 Prozentpunkte.

In einer weiteren bevorzugten Ausführungsform umfasst das Aufbaumaterial ein erstes pulverförmiges thermoplastisches Polyurethan-Material, ein zweites pulverförmiges thermoplastisches Polyurethan-Material und ein drittes pulverförmiges thermoplastisches Polyurethan-Material, wobei das erste pulverförmige thermoplastische Polyurethan-Material eine Reißdehnung (DIN 53504, 200 mm/min) von ≥ 200% bis ≤ 600% aufweist, das zweite pulverförmige thermoplastische Prozentpunkte bis ≤ 700 Prozentpunkte beträgt. Ein Beispiel für solch ein erfindungsgemäß geeignetes Aufbaumaterial umfasst ein erstes pulverförmiges thermoplastische Polyurethan-Material mit einer Reißdehnung (DIN 53504, 200 mm/min) von ≥ 300% bis ≤ 500% und ein zweites pulverförmiges thermoplastische Polyurethan- Material mit einer Reißdehnung (DIN 53504, 200 mm/min) von ≥ 100% bis ≤ 400%. Die Differenz der Reißdehnungen zwischen erstem und zweitem pulverförmigen thermoplastischen Polyurethan-Material beträgt ≥ 50 Prozentpunkte bis ≤ 400 Prozentpunkte.

Ein weiteres Beispiel für ein erfindungsgemäß geeignetes Aufbaumaterial umfasst ein erstes pulverförmiges thermoplastische Polyurethan-Material mit einer Reißdehnung (DIN 53504, 200 mm/min) von ≥ 150% bis ≤ 250% und ein zweites pulverförmiges thermoplastische Polyurethan-Material mit einer Reißdehnung (DIN 53504, 200 mm/min) von ≥ 200% bis ≤ 450%. Die Differenz der Reißdehnungen zwischen erstem und zweitem pulverförmigen thermoplastischen Polyurethan-Material beträgt ≥ 50 Prozentpunkte bis ≤ 300 Prozentpunkte.

In einer weiteren bevorzugten Ausführungsform umfasst das Aufbaumaterial ein erstes pulverförmiges thermoplastisches Polyurethan-Material, ein zweites pulverförmiges thermoplastisches Polyurethan-Material und ein drittes pulverförmiges thermoplastisches Polyurethan-Material, wobei das erste pulverförmige thermoplastische Polyurethan-Material eine Reißdehnung (DIN 53504, 200 mm/min) von ≥ 200% bis ≤ 600% aufweist, das zweite pulverförmige thermoplastische Polyurethan-Material eine Reißdehnung (DIN 53504, 200 mm/min) von ≥ 200% bis ≤ 600% aufweist, das dritte pulverförmige thermoplastische Polyurethan-Material eine Reißdehnung (DIN 53504, 200 mm/min) von ≥ 200% bis ≤ 600% aufweist, die Differenz der Reißdehnungen zwischen erstem und zweitem pulverförmigen thermoplastischen Polyurethan-Material ≥ 50 Prozentpunkte bis ≤ 100 Prozentpunkte beträgt und die die Differenz der Reißdehnungen zwischen zweitem und drittem pulverförmigen thermoplastischen Polyurethan-Material ≥ 50 Prozentpunkte bis ≤ 100 Prozentpunkte beträgt.

Ein Beispiel für solch ein erfindungsgemäß geeignetes Aufbaumaterial umfasst ein erstes pulverförmiges thermoplastische Polyurethan-Material mit einer Reißdehnung 5 (DIN 53504, 200 mm/min) von ≥ 400% bis ≤ 500%, ein zweites pulverförmiges thermoplastische Polyurethan-Material mit einer Reißdehnung (DIN 53504, 200 mm/min) von ≥ 300% bis ≤ 400% und ein drittes pulverförmiges thermoplastische Polyurethan-Material mit einer Reißdehnung (DIN 53504, 200 mm/min) von ≥ 200% bis ≤ 300%. Die Differenz der Reißdehnungen zwischen erstem und zweitem pulverförmigen thermoplastischen Polyurethan-Material beträgt ≥ 50 Prozentpunkte bis ≤ 100 Prozentpunkte und die Differenz der Reißdehnungen zwischen zweitem und drittem pulverförmigen thermoplastischen Polyurethan-Material beträgt ≥ 50 Prozentpunkte bis ≤ 100 Prozentpunkte.

Ein weiteres Beispiel für solch ein erfindungsgemäß geeignetes Aufbaumaterial umfasst ein erstes thermoplastische Polyurethan-Material mit einer Reißdehnung (DIN 53504, 200 mm/min) von ≥ 430% bis ≤ 470%, ein zweites thermoplastische Polyurethan-Material mit einer Reißdehnung (DIN 53504, 200 mm/min) von ≥ 330% bis ≤ 370% und ein drittes thermoplastische Polyurethan-Material mit einer Reißdehnung (DIN 53504, 200 mm/min) von ≥ 230% bis ≤ 270%. Die Differenz der Reißdehnungen zwischen erstem und zweitem thermoplastischen Polyurethan-Material beträgt ≥ 70 Prozentpunkte bis ≤ 85 Prozentpunkte und die Differenz der Reißdehnungen zwischen zweitem und drittem thermoplastischen Polyurethan-Material beträgt ≥ 70 Prozentpunkte bis ≤ 85 Prozentpunkte.

In einer weiteren bevorzugten Ausführungsform weist das Aufbaumaterial hinsichtlich seiner schmelzbaren Anteile einen Schmelzbereich (DSC, differential scanning calorimetry; 2. Aufheizung mit Aufheizrate 20 K/min.) auf, welcher im Temperaturbereich von ≥ 30 °C bis ≤ 90 °C liegt. Der Schmelzbereich liegt vorzugsweise in einem Temperaturbereich von ≥ 35 °C bis ≤ 80 °C und mehr bevorzugt von ≥ 45 °C bis ≤ 70 °C. Bei der DSC-Messung zur Bestimmung des Schmelzbereichs wird das Material folgendem Temperaturzyklus unterworfen: 1 Minute bei -60 °C, danach Aufheizen auf 240 °C mit 20 Kelvin/Minute, dann Abkühlen auf -60 °C mit 50 Kelvin/Minute, dann 1 Minute bei -60 °C, dann Aufheizen auf 150 °C mit 20 Kelvin/Minute. Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 80 °C, bevorzugt < 60 °C und mehr bevorzugt ≤ 50 °C beträgt.

In einer weiteren bevorzugten Ausführungsform weist das Aufbaumaterial hinsichtlich seiner schmelzbaren Anteile einen Schmelzbereich (DSC, differential scanning calorimetry; 2. Aufheizung mit Aufheizrate 20 K/min.) auf, welcher im Temperaturbereich von ≥ 100 °C bis ≤ 240 °C liegt. Der Schmelzbereich liegt vorzugsweise in einem Temperaturbereich von ≥ 110 °C bis ≤ 230 °C und mehr bevorzugt von ≥ 120 °C bis ≤ 220 °C. Bei der DSC-Messung zur Bestimmung des Schmelzbereichs wird das Material folgendem Temperaturzyklus unterworfen: 5 1 Minute bei -60 °C, danach Aufheizen auf 260 °C mit 20 Kelvin/Minute, dann Abkühlen auf -60 °C mit 50 Kelvin/Minute, dann 1 Minute bei -60 °C, dann Aufheizen auf 260 °C mit 20 Kelvin/Minute. Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 80 °C, bevorzugt < 60 °C und mehr bevorzugt ≤ 50 °C beträgt.

Das erfindungsgemäße Verfahren eignet sich zusammenfassend besonders für die Verarbeitung thermisch empfindlicher oder hochschmelzender teilkristalliner thermoplastischer Polymere, sowie von amorphen Thermoplasten mit einem scharfen Glasübergangspunkt. Besonders bevorzugte Verfahrensbedingungen weichen dabei deutlich von Verfahrensbedingungen ab, die von den Herstellern der Polymere für Spritzgus bzw. für Extrusionverfahren empfohlen werden.

Durch die nachfolgenden Versuche konnte gezeigt werden, das diese Standard-Verarbeitungsbedingungen für den Nachsinterprozess typischerweise nicht geeignet sind. Erfindungsgemäß bevorzugte Sinter-Temperaturen liegen dabei mindestens 5 °C oberhalb der Schmelztemperatur bei semikristallinen Thermoplasten und mindestens 35 °C oberhalb der Schmelztemperatur bei amorphen Thermoplasten, sowie bevorzugt mindestens 20 °C bevorzugt mindestens 30 °C und ganz besonders bevorzugt mindestens 50 °C bei amorphen Thermoplasten unterhalb der normalen vom Hersteller empfohlenen Verarbeitungstemperatur der Polymere im Spritzguss.

Dabei wird die Sintertemperatur bevorzugt so gewählt, dass das Polymere in der Schmelze eine komplexe Viskosität (gemessen in Oszillation in einem Platte-Platte Rheometer bei einer Frequenz von 1Hz und einer Amplitude von 1%) bei Sintertemperatur von ≥ 100 Pas und ≤ 50000 Pas aufweist, besonders bevorzugt ≥ 500 Pas und ≤ 30000 Pas und ganz besonders bevorzugt ≥ 1000 Pas und ≤ 10000 Pas aufweist. Bevorzugt beträgt dabei die Sinterzeit zwischen 5min und 4h, besonders bevorzugt zwischen 10 min und 1h und ganz besonders bevorzugt zwischen 15 min und 1h. Bevorzugt werden dabei hohe Sintertemperaturen mit kurzen Verweilzeiten kombiniert. Hohe Sintertemperaturen sind in diesem Kontext Temperaturen von ≥ 50 °C oberhalb des Schmelzpunktes bei amorphen Thermoplasten und ≥ 20 °C oberhalb des Schmelzpunktes bei teilkristallinen Thermoplasten. Kurze Verweilzeiten sind in diesem Kontext Sinterzeiten von ≤ 30 min. Dadurch werden erfindungsgemäß stabile gesinterte Körper erhalten und die Polymere bauen nur geringfügig ab bzw. verfärben nur wenig und werden nicht so dünnflüssig, dass sie in das Stützmaterial verlaufen können.

Erfindungsgemäß wird als geeignete Orientierungsgröße die komplexe Viskosität in der Schmelze bei niedriger Scherrate herangezogen, bevorzugt gemessen in einem Platte-Platte Rheometer in Oszillation bei einer Frequenz von 1Hz und einer Amplitude von 1%, in einem Temperaturbereich vom Schmelzpunktes des Polymeren bis zu einer Temperatur von maximal 150 °C oberhalb des Schmelzpunktes. Aus dieser Messung werden erfindungsgemäß Betriebspunkte ausgewählt, die eine komplexe Viskosität von ≥ 100 Pas und ≤ 50000 Pas zeigen, wobei bevorzugt die Viskosität ≥ 500 Pas und ≤ 30000 Pas und ganz besonders bevorzugt ≥ 1000 Pas und ≤ 10000 Pas liegt, da in diesem Viskositätsfenster ein besonders schnelles Sintern mit einer besonders guten Bauteilstabilität beobachtet wurde. So werden Produktivität des Prozesses und Produkteigenschaften ideal kombiniert.

Die erfindungsgemäß erhaltenen Gegenstände können natürlich wie im Stand der Technik bekannt weiterverarbeitet werden. Beispielsweise durch Infusion, Beschichtung, Bemalung, Beflammung, Fluorierung und andere bekannte mechanische und chemische Behandlungen zur Vergütung und/oder Veränderung und/oder Funktionalisierung der Oberfläche von Plastik und Metallgegenständen.

Diesbezüglich ist es besonders bevorzugt, dass im Zugversuch angelehnt an DIN EN ISO 527:2012-06 das Produkt eine Zugfestigkeit aufweist, die größer ist, als die Zugfestigkeit des nicht getemperten Gegenstandes oder in anderen Worten, dass die Schichten des behandelten Gegenstands zueinander nach Verfahrensschritt b) eine Zugfestigkeit aufweisen, die größer ist, als vor Verfahrensschritt b).

Dabei ist es besonders bevorzugt, dass im Zugversuch angelehnt an DIN EN ISO 527 der behandelte Gegenstand eine Zugfestigkeit aufweist, die größer ist, als die Zugfestigkeit des unbehandelten Gegenstands um einen Betrag von ≥ 10%, bevorzugt um einen Betrag von ≥ 20%, weiter bevorzugt um einen Betrag von ≥ 30%, weiter bevorzugt um einen Betrag von ≥ 50%, weiter bevorzugt um einen Betrag von ≥ 100%, wobei die vorstehend beschriebenen Werte sich auf die Zugfestigkeit des unbehandelten Gegenstands beziehungsweise des Gegenstands vor Verfahrensschritt b) beziehen. Die Vorteilhaftigkeit des erfinderischen Verfahrens ist dabei besonders stark in der vertikalen Baurichtung ausgeprägt.

Es kann weiterhin erreicht werden, dass die Dichte des behandelten Gegenstands größer ist als die Dichte des unbehandelten Gegenstands, oder in anderen Worten, dass die Dichte nach Verfahrensschritt b) größer ist, als vor Verfahrensschritt b). Dabei kann es besonders bevorzugt sein, dass die Dichte des behandelten Gegenstands größer ist als die Dichte des unbehandelten Gegenstands um einen Betrag von ≥ 2%, bevorzugt um einen Betrag von ≥ 5%, weiter bevorzugt um einen Betrag von ≥ 8%, weiter bevorzugt um einen Betrag von ≥ 10%, bezogen auf die Dichte des unbehandelten Gegenstands beziehungsweise bezogen auf die Dichte des Gegenstands vor Verfahrensschritt b).

In einer bevorzugten Ausgestaltung des erfindungsgemäßen Gegenstandes weist die Oberfläche des Gegenstandes einen Mittenrauwert Ra bestimmt nach DIN EN ISO 4287:2010 von ≤ 1000 µm auf. Durch die Anwendung des erfindungsgemäßen Verfahrens lassen sich besondere Oberflächenstrukturen des Bauteils erhalten, welche sich gänzlich von denen konventionell über 3D-Druck hergestellter Oberflächen unterschieden. Insbesondere können über die Wahl geeigneter Partikelgrößen, wie vorstehend beschrieben, sehr glatte Oberflächen des Bauteils erhalten werden. Bevorzugt kann die Oberflächenrauigkeit des Bauteils ≤ 500 µm, oder bevorzugt ≤ 200 µm oder bevorzugt in einem Bereich von 10 bis 500 µm, oder bevorzugt in einem Bereich von 50 bis 200 µm liegen.

Im Folgenden beziehungsweise in den folgenden Tabellen erfindungsgemäß besonders bevorzugte, aber in keiner Weise beschränkende Beispiele von Kombinationen von Aufbaumaterial und Stützmaterial genannt.

| **Schmelzbares Polymer (Aufbaumaterial)** | **Pulverbett (Stützmaterial)** |
|---|---|
| Thermoplastisches Polyurethan (TPU) | NaCl, MgSO₄, MgCl₂, CaCO₃ |
| Polycarbonat (PC) | NaCl, MgSO₄, MgCl₂, CaCO₃ |
| Polymethylmethacrylat (PMMA) | NaCl, MgSO₄, MgCl₂, CaCO₃ |
| Polyamid (PA) | NaCl, MgSO₄, MgCl₂, CaCO₃ |
| Polypropylen (PP) | NaCl, MgSO₄, MgCl₂, CaCO₃ |
| Acrylnitrilbutadienstyrol (ABS) | NaCl, MgSO₄, MgCl₂, CaCO₃ |
| Polyethylen (PE) | NaCl, MgSO₄, MgCl₂, CaCO₃ |
| Polyetheretherketon (PEEK) | NaCl, MgSO₄, MgCl₂ |
| Polyamid 6 | NaCl, MgSO₄, MgCl₂, CaCO₃ |
| Polyamid 66 | NaCl, MgSO₄, MgCl₂, CaCO₃ |
| Polyamid 12 | NaCl, MgSO₄, MgCl₂, CaCO₃ |
| Polyamid 46 | NaCl, MgSO₄, MgCl₂, CaCO₃ |
| Polyamid 11 | NaCl, MgSO₄, MgCl₂, CaCO₃ |
| Copolyamid | NaCl, MgSO₄, MgCl₂, CaCO₃ |
| Copolyesteramid | NaCl, MgSO₄, MgCl₂, CaCO₃ |
| Copolyetheramide (PEBA) | NaCl, MgSO₄, MgCl₂, CaCO₃ |
| Polyaryletherketon (PEAK) | NaCl, MgSO₄, MgCl₂, CaCO₃ |
| Polyimid | NaCl, MgSO₄, MgCl₂, CaCO₃ |
| Polyaramid | NaCl, MgSO₄, MgCl₂, CaCO₃ |
| Polychloropren (CR) | NaCl, MgSO₄, MgCl₂, CaCO₃ |
| Polybutadien (BR) | NaCl, MgSO₄, MgCl₂, CaCO₃ |
| Polybutadiennitril (NBR) | NaCl, MgSO₄, MgCl₂, CaCO₃ |
| Hydriertes Polybutadiennitril (HNBR) | NaCl, MgSO₄, MgCl₂, CaCO₃ |
| Ethylenvinylacetat (EVA) | NaCl, MgSO₄, MgCl₂, CaCO₃ |
| Fluorkautschuk | NaCl, MgSO₄, MgCl₂, CaCO₃ |
| Styrol-Butadien-Blockcopolymere (SBS) | NaCl, MgSO₄, MgCl₂, CaCO₃ |
| Polyvinylchlorid (PVC) | NaCl, MgSO₄, MgCl₂, CaCO₃ |
| Polyvinylacetat (PVA) | NaCl, MgSO₄, MgCl₂, CaCO₃ |
| Polyfluorethylen (PTFE) | NaCl, MgSO₄, MgCl₂ |
| Polyarylsulfone | NaCl, MgSO₄, MgCl₂, CaCO₃ |

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter aufweist und nicht dazu gedacht ist, die Erfindung einzuschränken. Es zeigt die:

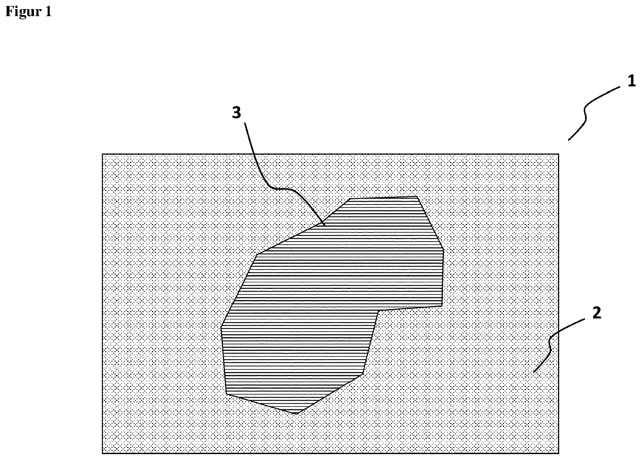

Fig. 1 eine mögliche Ansicht einer einzelnen Pulverschichtlage in der Aufsicht.

Die Figur 1 zeigt in einer schematischen Aufsicht die Geometrie einer Pulverschichtlage 1 auf einem Substrat (nicht dargestellt) nach der Ablage. Es sind in der Pulverschicht zwei unterschiedliche Bereiche vorhanden, nämlich Bereich 2 und Bereich 3 mit jeweils unterschiedlichen Komponenten mit unterschiedlichen Schmelzpunkten vorhanden. Je nach gewünschter Ausgestaltung des Werkstücks kann entweder der Bereich 2 eine Komponente mit höheren und der Bereich 3 eine Komponente mit niedrigerem Schmelzpunkt aufweisen. Es ist aber auch möglich, dass der Bereich 2 die Komponente mit niedrigerem und der Bereich 3 die Komponente mit dem höheren Schmelzpunkt aufweist. Soll beispielsweise eine Schicht des gewünschten Werkstücks eine Geometrie des Bereiches 3 aufweisen, so kann dieser Bereich 3 mit einer Komponente mit niedrigerem Schmelzpunkt aufgefüllt werden. Um diesen Bereich 3 herum und diesen aussparend wird dann die Komponente mit höherem Schmelzpunkt abgelegt. Insofern ergibt sich innerhalb einer Ablageschicht eine räumliche Trennung zwischen beiden Komponenten. Die räumliche Ausdehnung der Komponente mit dem höheren Schmelzpunkt ergibt sich dabei aus den Stellen, an denen nicht die Komponente mit dem niedrigeren Schmelzpunkt abgelegt wird. Die Komponente mit dem höheren Schmelzpunkt bildet also in der Schicht das "Negativ" der Komponente mit dem niedrigeren Schmelzpunkt. Werden mehrere Komponenten mit unterschiedlichen Schmelzpunkten eingesetzt, bildet immer die Komponente mit dem höchsten Schmelzpunkt in der jeweiligen Schicht die Flächen- und später Volumenbereiche aus, welche nicht das Bauteil bilden. Hier nicht gezeigt, können sich natürlich auch die Bereiche 2 und 3 mit den unterschiedlichen Materialien in einer Schicht mehrfach abwechseln.

### Beispiele

Die vorliegende Erfindung wird durch die nachfolgenden Beispiele näher erläutert, ohne jedoch darauf beschränkt zu sein.

### Prüfverfahren:

Die erhaltenen Probenkörper wurden nach DIN EN ISO 527-2 im Zugversuch geprüft.

Korngrößen bzw. Partikeldurchmesser: Wenn nicht anders spezifiziert wurden Korngrößen bzw. Partikelgrößen mittels Laserbeugung (HELOS - Partikelgrößenanalyse) ermittelt bzw. angegeben wie vom Hersteller erhalten, gegebenenfalls wurden die erhaltenen Pulver gesiebt um eine maximal Korngröße sicherzustellen.

Der Schmelzpunkt wird dabei über DSC unter N₂-Schutzgas mit einer Aufheizrate von 20 °C/min bestimmt oder den Produktdatenblättern entnommen. Bei einem breiten Schmelzbereich wurde die Schmelzpeaktemperatur aus der DSC als Schmelzpunkt definiert. Bei einem Material, dass nur einen Glaspunkt aufweist, wird der Wendepunkt in der DSC als Glaspunkt definiert.

### Einsatzstoffe:

NaCl: Speisesalz mit Korngröße von ≤ 0,2 mm, nach Siebung durch ein Filtersieb mit 0,2 mm Filterporen, Schmelzpunkt ca. 800 °C.

Sand: Sakret Quarzsand mit einer Körnung von 0,1-0,5 mm, Schmelzpunkt ca. 1700 °C.

Carnaubawachs ("Carnauba"): Schuppenware in 0,1-2 mm Teilchengröße von Beegut Carnaubawachs (copernicia cerifera cera), Schmelzpunkt 80 °C.

Polycarbonat ("PC"): Makrolon^{®} 2408 wurde bezogen von der Covestro Deutschland AG. Das verwendete Polycarbonat Pulver wurde erhalten durch Kryomahlen. Dazu wurde das Polycarbonat mit 0,2 Gew.-%, bezogen auf Polycarbonat, hydrophobierter pyrogener Kieselsäure als Fließmittel (Aerosil^{®} R972 von Evonik) vermengt und die Mischung mechanisch unter Tiefkälte (kryogener Zerkleinerung mit flüssigen Stickstoff) in einer Stiftmühle zu Pulver verarbeitet und anschließend durch eine Siebmaschine klassifiziert. 90 Gew.-% des Mittels hatten einen Teilchendurchmesser von kleiner 0,14 mm (gemessen mittels Laserbeugung (HELOS - Partikelgrößenanalyse)). Die Glasübergangstemperatur betrug 148 °C.

Thermoplastisches Polyurethan 1 ("TPU-1"): Luvosint X92-A2 3D Druck Pulver; Thermoplastisches Polyurethan (TPU) auf Esterbasis, Pulver, weiß wurde bezogen von LEHMANN & VOSS Gruppe und vor dem Einsatz durch ein 0,2 mm Sieb klassifiziert, die Teilchengröße betrug ≤ 0,2 mm. Die Schmelztemperatur betrug 160 °C.

Thermoplastisches Polyurethan 2 ("TPU-2"): Polyurethanpulver auf Basis eines Polyurethan auf Esterbasis. Erhalten durch Kryomahlen des getrockneten Polymerfilms einer Polyurethanklebstoffdispersion. Dazu wurde der trockene Polyurethanfilm grob mechanisch zerkleinert und dann mit 0,2 Gew.-%, bezogen auf das Polyurethan, hydrophobierter pyrogener Kieselsäure als Fließmittel (Aerosil^{®} R972 von Evonik) vermengt und die Mischung mechanisch unter Tiefkälte (kryogener Zerkleinerung mit flüssigen Stickstoff) in einer Stiftmühle zu Pulver verarbeitet und anschließend durch eine Siebmaschine klassifiziert. 90 Gew.-% des Mittels hatten einen Teilchendurchmesser von kleiner 0,14 mm (gemessen mittels Laserbeugung (HELOS - Partikelgrößenanalyse)). Die Schmelztemperatur betrug 48 °C. Das Polyurethan ist erhältlich aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4- Butandiol mit einem Molverhältnis dieser Diole von ≥ 1:4 bis ≤ 4:1 erhältlich ist und welches ein zahlenmittleres Molekulargewicht Mn (GPC, gegen Polystyrol-Standards) von ≥ 4000 g/mol bis ≤6000 g/mol aufweist.

Polyethylenpulver ("PE"): RM 10440 UV, Pulver, Metallocen-Polyethylen mittlerer Dichte erhalten über Polymerisation durch Metallocene (mMDPE) enthaltend Hexan als Comonomer und Antioxidations- und UV Stabilisierungs-Additive. Pulver mit Teilchengröße ≤ 0,5 mm, eingesetzt nach Filtern durch ein 0,5 mm Filtersieb. Die Schmelztemperatur betrug 140 °C.

Polyamid 12 ("PA12"): FS3300 PA von Farsoon, Nylon 12 Pulver, Schmelzpunkt 183 °C für den Einsatz im 3D Pulverdruck, verwendet wie erhalten.

Im Folgenden werden verschiedene Versuche beschrieben, in denen ein nach dem erfindungsgemäßen Verfahren durch getrennte Ablage von mindestens 2 verschiedenen pulverförmigen Materialien mit einem Schmelzpunktunterschied von ≥ 50 °C erzeugter Gegenstand auf seine Eigenschaften vor und nach dem Tempern untersucht wurden.

Zur Herstellung der erfindungsgemäßen Probenkörper wurde NaCl und für Vergleichsversuche auch der Quarz-Sand in mehreren Schichten bis zu einer Höhe von mindestens 5 mm mittels der Pulverrolle eines Farsoon FS251P 3D SLS Druckers bei 23 °C auf ein eingelegtes 2 mm dickes 10 cm * 10 cm-Stahlblech aufgetragen. Auf diese Schicht wurden mindestens 2 mm einer Schicht eines Polymerpulvers mittels der gleichen Pulverrolle durch Austausch des Baumaterials im Vorratsbehälter des Farsoon FS251P 3D SLS Druckers wiederum bei 23 °C aufgetragen.

Auf diese Schicht wurden wiederum mindestens 5 mm NaCl in mehreren Schichten aufgetragen, bis ein asymmetrisches Sandwich von NaCl-Polymer-NaCl Pulver bzw. Sand-Polymer-Sand entstanden war. Das so erhaltene Sandwich wurde vorsichtig auf dem Stahlblech aus dem Lasersinterdrucker genommen und in einem separaten Ofen auf die gewünschte Temperatur für eine gewünschte Zeit erhitzt, um die Polymerschicht selektiv zu sintern. Die so erhaltene gesinterte Polymerschicht wurde aus dem Ofen als Sandwich entfernt und auf 23 °C innerhalb von 1 h abkühlen gelassen, wobei während des Abkühlens ein zweites 2mm Stahlblech mit einem 1 kg Gewicht beschwert aufgelegt wurde, um ein Verziehen der Prüfkörper zu verhindern. Dann wurde das NaCl zuerst mechanisch mittels einer weichen Bürste und dann durch Abspülen mit Leitungswasser vollständig von NaCl gereinigt und mit Aufsaugpapier trocken gewischt. Der Quarz-Sand wurde mechanisch entfernt.

Aus der so erhaltenen Polymerplatte wurden mehrere Prüfkörper (gegebenenfalls bei leicht erhöhter Temperatur, um einen vorzeitigen Sprödbruch der Prüfkörper zu verhindern) gestanzt und die so erhaltenen Prüfkörper optisch und haptisch beurteilt sowie nach Konditionierung (24 h bei 23 °C und 50% relativer Luftfeuchtigkeit) im Zugversuch DIN EN ISO 527-2 geprüft.

Die Ergebnisse sind mit Probe 1 bis 21 in den beiden nachfolgenden Tabellen aufgeführt. Vergleichsversuche sind mit* gekennzeichnet. Alle nichtgetemperten Pulver zeigten keine Festigkeit auf.

| | **Höherschmelzendes Material** | **Tempern bei** | **Maximal-Spannung** | **BruchSpannung** | **BruchDehnung** | **Bemerkungen** |
|---|---|---|---|---|---|---|
| | | | **MPa** | **MPa** | % | |

| **Carnauba** | | | | | | |
|---|---|---|---|---|---|---|
| Probe 1^{∗} | NaCl | 1h, 90 °C | -- | -- | -- | Material zu niederviskos, Schmelze verläuft im Salz |

| **PC** | | | | | | |
|---|---|---|---|---|---|---|
| Probe 2 | NaCl | 1h, 200 °C | 25,1 | 25,1 | 2,9 | Gelbverfärbung |
| Probe 3* | NaCl | 1h, 150 °C | - | - | - | Spröde; nicht versintert |
| Probe 4* | NaCl | 30 min, 175 °C | - | -- | - | Spröde; nicht versintert |
| Probe 5* | NaCl | 1h, 175 °C | - | -- | - | Spröde; nicht versintert |
| Probe 6* | NaCl | 30 min, 185 °C | - | -- | - | Spröde; nicht versintert |
| Probe 7 | NaCl | 1h, 200 °C | 22,4 | 22,4 | 3,5 | unter N₂ gesintert, fast unverfärbt |

| **TPU-1** | | | | | | |
|---|---|---|---|---|---|---|
| Probe 8 | NaCl | 1h, 165 °C | 4,5 | 4,5 | 86,6 | |
| Probe 9 | NaCl | 30 min, 185 °C | 12,4 | 12,4 | 150,2 | Leichte Gelbverfärbung |
| Probe 10 | NaCl | 30 min, 200 °C | 14,4 | 14,4 | 184,5 | Gelbverfärbung |

| **TPU-2** | | | | | | |
|---|---|---|---|---|---|---|
| Probe 11^{∗} | NaCl | 2h, 50 °C | - | - | - | Nicht versintert |
| Probe 12 | NaCl | 1h, 90 °C | 13,8 | 13,8 | 822 | |
| Probe 13 | NaCl | 20 min, 185 °C | 11,3 | 11,3 | 685 | Leichte Gelbverfärbung |
| Probe 14 | NaCl | 30 min, 100 °C | 9,8 | 9,8 | 541 | Leichte Gelbverfärbung |
| Probe 15* | Sand | 1h, 90 °C | 11,7 | 11,7 | 633 | Sand kann nicht mehr von Matrix getrennt werden |
| Probe 16 | NaCl | 1h, 90 °C | 15,7 | 15,7 | > 1000 | Probe wurde mit Metallplatte und 1 kg Gewicht während des Sinterns beschwert; nicht gerissen |

| | | | | | | |
|---|---|---|---|---|---|---|
| Mit * gekennzeichnete Versuche sind Vergleichsversuche | | | | | | |

| | **Höherschmelzendes Material** | **Tempern bei** | **Maximal-Spannung** | **BruchSpannung** | **BruchDehnung** | **Bemerkungen** |
|---|---|---|---|---|---|---|
| | | | **MPa** | **MPa** | % | |

| **PE** | | | | | | |
|---|---|---|---|---|---|---|
| Probe 17 | NaCl | 1h, 160 °C | 12,1 | 3,8 | 15,1 | |
| Probe 18* | NaCl | 1h, 100 °C | -- | -- | -- | Nicht versintert |
| Probe 19 | NaCl | 30 min, 200 °C | 10,4 | 4,2 | 20,6 | |

| **PA12** | | | | | | |
|---|---|---|---|---|---|---|
| Probe 20 | NaCl | 1h, 200 °C | 20,7 | 20,7 | 9,1 | |
| Probe 21^{∗} | NaCl | 2h, 175 °C | -- | -- | -- | Gelbverfärbung; nicht versintert |

| | | | | | | |
|---|---|---|---|---|---|---|
| Mit * gekennzeichnete Versuche sind Vergleichsversuche | | | | | | |

In dem erfindungsgemäßen Verfahren konnten in einem 3D Schicht-Muster abgelegte Polymerpulver unter Erhalt der abgelegten Geometrie zu Bauteilen mit guten mechanischen Eigenschaften versintert werden. Darunter sind auch Polymere, die in Sinterprozessen aufgrund ihrer Polymereigenschaften wie eine hohe Glasübergangstemperatur (zum Beispiel Polycarbonat) oder eine starke Verzugsneigung und schnelle Kristallisation (zum Beispiel Polyethylen) als schwer versinterbar gelten, sowie Partikelgrößen von ≥ 0,2 mm, die typischerweise in Pulversinterverfahren nur zu hochporösen Produkten führen.

Insgesamt ist der erfindungsgemäße Prozess besonders für die Verarbeitung thermisch empfindlicher oder hochschmelzender teilkristalliner thermoplastischer Polymere sowie von amorphen Thermoplasten mit scharfem Glasübergang geeignet.

Die Versuche zeigen weiter, dass Polymere mit niedrigem Molekulargewicht (z. B. Carnaubawachs) nicht zu den gewünschten formstabilen Produkten führen, da eine zu niedrige Schmelzeviskositäten zum Einfließen des Polymeren in die Matrix des Stützpulvers sowie zu Formverlust führen.

Weiter zeigen die Versuche, dass bevorzugt Temperaturen eingesetzt werden sollten, die mindestens 5 °C oberhalb der Schmelztemperatur bei semikristallinen Thermoplasten und mindestens 30 °C oberhalb der Schmelzetemperatur bei amorphen Thermoplasten und bevorzugt mindestens 20 °C unterhalb der normalen vom Hersteller empfohlenen Verarbeitungstemperatur der Polymere im Spritzguss liegen.

Weiter zeigen Versuche des Sinterns in ungeeigneten Stützpulvern, die am Polymerpulver haften und nicht leicht abgewaschen werden können, dass sich die Oberflächen gegebenenfalls nicht mehr vom Stützpulver reinigen lassen, was zu einer Verschmutzung der Oberflächen und zu einem Verlust an Oberflächenqualität führt.

Alle erfindungsgemäßen Versuche zeigen weiterhin, dass das vom 3D Bauprozess getrennte und nachgeschaltete Sintern nicht nur eine deutliche Verbesserung der Materialausbeuten aufweist, da nur das Polymermaterial sintert, sondern dass sich die Produkte unter Erhalt der gewünschten Bauformen gegenüber dem Pulver zu hochwertigen mechanisch stabilen Baukörpern verbinden lassen.

Weiter zeigen die Versuche eine Verbesserung der mechanischen Eigenschaften nach erfindungsgemäßer Temperaturlagerung im Vergleich zu den nicht getemperten Proben und den Vorteil von nachgeschaltetem inerten Sintern und dem Aufschlag von Druck während des Sinterprozesses und während des Abkühlprozesses auf.

Im Vergleich zu klassischen Lasersinterprozessen nahm an den beobachteten Proben die Dichte der erfindungsgemäß nachgetemperten Proben gegenüber dem Pulver im Nachsinterprozess deutlich zu, so dass diese zu erwartende Schwindung bevorzugt schon beim Design des gewünschten Druckproduktes berücksichtigt werden sollte.

## Patentansprüche

1. Verfahren zur additiven Fertigung von Bauteilen, umfassend die Schritte:
a) Ein- oder mehrmaliges Ablegen mindestens zweier verschiedener pulverförmiger Komponenten mit einem Unterschied im Schmelzpunkt von ≥ 50 °C auf einem Substrat oder auf eine schon abgelegte Schicht, wobei die pulverförmige Komponente mit dem niedrigsten Schmelzpunkt (3) in der Form des Bauteiles und die pulverförmige Komponente mit dem höchsten Schmelzpunkt (2) als Negativ dazu in einer Schicht abgelegt werden,
b) Hitzebehandeln der Pulverschichtung (1) auf eine Temperatur oberhalb des Schmelzpunkts der Komponente mit dem niedrigsten Schmelzpunkt (3) und unterhalb des Schmelzpunktes der Komponente mit dem höchsten Schmelzpunkt (2), wobei die Pulverbestandteile der Komponente mit dem niedrigeren Schmelzpunkt (3) auf und zumindest partiell zusammengeschmolzen werden,
c) Abkühlen der hitzebehandelten Pulverschichtung (1) aus Schritt b) auf eine Temperatur unterhalb des Schmelzpunkt der am niedrigsten schmelzenden Komponente (3) und
d) Entfernen der nicht zusammengeschmolzenen pulverförmigen Komponenten unter Erhalt des Bauteils,
**dadurch gekennzeichnet, dass**
| | |
|---|---|
| entweder: | die pulverförmige Komponente mit dem niedrigsten Schmelzpunkt (3) ausgesucht ist aus der Gruppe bestehend aus Polyetheretherketon (PEEK), Polyaryletherketon (PAEK), Polyetherketonketon (PEKK), Polyethersulfone, Polyimid, Polyetherimid, Polyester, Polyamide, Polycarbonate, Polyurethane, Polyvinylchlorid, Polyoxymethylen, Polyvinylacetat, Polyacrylate, Polymethacrylate, Polyethylen, Polypropylen, Polylactid, ABS (Acrylnitril-Butadien-Styrol-Copolymere), PETG (Glycol modifiziertes Polyethylenterephtalat), Polystyrol oder Mischungen aus mindestens zwei der vorgenannten Polymere und dass |
| | die pulverförmige Komponente mit dem höchsten Schmelzpunkt (2) ein anorganisches Salz der Alkalimetalle, ein anorganisches Salz der Erdalkalimetalle oder eine Mischung aus mindestens zwei der vorgenannten Salze ist |
| oder: | die pulverförmige Komponente mit dem niedrigsten Schmelzpunkt (3) Polychloropren (CR), Polybutadien (BR), Polybutadiennitril (NBR), Hydriertes Polybutadiennitril (HNBR), Ethylenvinylacetat (EVA), Fluorkautschuk, Styrol-Butadien-Blockcopolymere (SBS), Polyvinylchlorid (PVC), Polyvinylacetat |
| | (PVA), Polyfluorethylen (PTFE) oder Polyarylsulfon ist und dass |
| | die pulverförmige Komponente mit dem höchsten Schmelzpunkt (2) NaCl, MgSO₄, MgCl₂ oder CaSO₄ ist, mit der Ausnahme, dass CaSO₄ für Polyfluorethylen (PTFE) nicht vorgesehen ist. |

2. Verfahren gemäß Anspruch 1, wobei 90 Gew.-% der Partikel der pulverförmigen Komponente mit dem niedrigsten Schmelzpunkt (3) einen Teilchendurchmesser gemessen nach ISO 13320:2009-10 von ≤ 0,25 mm aufweisen.

3. Verfahren gemäß einem der vorhergehenden Ansprüche, wobei Verhältnis des mittleren Teilchendurchmessers der pulverförmigen Komponente mit dem niedrigsten Schmelzpunkt (3) zum mittleren Teilchendurchmessers der pulverförmigen Komponente mit dem höchsten Schmelzpunkt (2), berechnet aus D_{niedrig}/D_{hoch}, ≥ 1 und ≤ 10 beträgt.

4. Verfahren gemäß einem der vorhergehenden Ansprüche, wobei die Hitzebehandlung im Schritt b) bei einem Druckunterschied von ≥ 25 kPa bezogen auf Normaldruck erfolgt.

5. Verfahren gemäß einem der vorhergehenden Ansprüche, wobei vor der Hitzebehandlung im Verfahrensschritt b) die Pulverschichtung (1) mit einem Inertgas beaufschlagt wird.

6. Verfahren gemäß einem der vorhergehenden Ansprüche, wobei die mittlere Temperatur im Verfahrensschritt b) bezogen auf die mittlere Temperatur im Verfahrensschritt a) um ≥ 20 °C höher liegt.

7. Verfahren gemäß einem der vorhergehenden Ansprüche, wobei mindestens 3 pulverförmige Komponenten eingesetzt werden, wobei mindestens 2 der 3 pulverförmigen Komponenten Polyurethane mit einer Shore-Härte ermittelt nach DIN ISO 7619-1:2012 von ≥ 40A bis ≤ 90D umfassen und die Differenz der Shore-Härten zwischen den 3 pulverförmigen Komponenten ≥ 2A bis ≤ 40A beträgt.

8. Verfahren gemäß einem der vorhergehenden Ansprüche, wobei mindestens 3 pulverförmige Komponenten eingesetzt werden, wobei mindestens 2 der 3 pulverförmigen Komponenten Polyurethane mit einer Shore-Härte ermittelt nach DIN ISO 7619-1:2012 von ≥ 40A bis ≤ 90D umfassen und die Differenz der Shore-Härten zwischen den pulverförmigen Komponenten ≥ 2A bis ≤ 40A beträgt und mindestens eine pulverförmige Komponente einen Schmelzpunkt von ≥ 50 °C oberhalb der Schmelzpunkte der anderen pulverförmigen Komponenten aufweist.

9. Verfahren gemäß einem der vorhergehenden Ansprüche, wobei das Ablegen der pulverförmigen Komponenten (2, 3) in Verfahrensschritt a) über ein ortsselektives Ablageverfahren aus der Gruppe bestehend aus Pulversiebdruck, Pulversuspensionssiebdruck, elektrostatische Walzen- oder Platten-Pulverablageverfahren, Pulverjetting, Pulverdispensing, Pulversuspensionsdruck oder Kombinationen aus mindestens zwei Verfahren daraus ausgesucht ist.

10. Verfahren gemäß einem der vorhergehenden Ansprüche, wobei es sich bei dem oder mindestens einem der niedrigschmelzenden Pulver (3) um ein Reaktivpulver handelt, welches im Verfahrensschritt b) zur Reaktion gebracht wird.

## Claims

1. Method of additive manufacture of components, comprising the steps of:
a) laying at least two different pulverulent components having a difference in melting point of ≥ 50°C once or more than once on a substrate or on an already laid layer, where the pulverulent component having the lowest melting point (3) is laid in the form of the component and the pulverulent component having the highest melting point (2) as the negative thereof in a layer;
b) subjecting the powder layer (1) to heat treatment at a temperature above the melting point of the component having the lowest melting point (3) and below the melting point of the component having the highest melting point (2), wherein the powder constituents of the component having the lower melting point (3) are melted and at least partially fused;
c) cooling the heat-treated powder layer (1) from step b) down to a temperature below the melting point of the lowest-melting component (3) and
d) removing the unfused pulverulent components to obtain the component, **characterized in that**
| | |
|---|---|
| either: | the pulverulent component having the lowest melting point (3) is selected from the group consisting of polyetheretherketone (PEEK), polyaryletherketone (PAEK), polyetherketoneketone (PEKK), polyethersulfones, polyimide, polyetherimide, polyester, polyamides, polycarbonates, polyurethanes, polyvinylchloride, polyoxymethylene, polyvinylacetate, polyacrylates, polymethacrylates, polyethylene, polypropylene, polylactide, ABS (acrylonitrile-butadiene-styrene copolymers), PETG (glycol-modified polyethylene terephthalate), polystyrene or mixtures of at least two of the aforementioned polymers, and **in that** |
| | the pulverulent component having the highest melting point (2) is an inorganic salt of the alkali metals, an inorganic salt of the alkaline earth metals or a mixture of at least two of the aforementioned salts, |
| or: | the pulverulent component having the lowest melting point (3) is polychloroprene (CR), polybutadiene (BR), polybutadienenitrile (NBR), hydrogenated polybutadienenitrile (HNBR), ethylene-vinyl acetate (EVA), fluoro rubber, styrenebutadiene block copolymers (SBS), polyvinylchloride (PVC), polyvinylacetate (PVA), polyfluoroethylene (PTFE) or polyarylsulfone, and **in that** |
| | the pulverulent component having the highest melting point (2) is NaCl, MgSO₄, MgCl₂ or CaSO₄, except that CaSO₄ is not intended for polyfluoroethylene (PTFE). |

2. Method according to Claim 1, wherein 90% by weight of the particles of the pulverulent component having the lowest melting point (3) have a particle diameter measured to ISO 13320:2009-10 of ≤ 0.25 mm.

3. Method according to either of the preceding claims, wherein the ratio of the average particle diameter of the pulverulent component having the lowest melting point (3) to the average particle diameter of the pulverulent component having the highest melting point (2), calculated from D_{low}/D_{high}, is ≥ 1 and ≤ 10.

4. Method according to any of the preceding claims, wherein the heat treatment in step b) is effected at a pressure difference of ≥ 25 kPa based on standard pressure.

5. Method according to any of the preceding claims, wherein the heat treatment in method step b) is preceded by contacting of the powder layer (1) with an inert gas.

6. Method according to any of the preceding claims, wherein the average temperature in method step b) is ≥ 20°C higher than the average temperature in method step a).

7. Method according to any of the preceding claims, wherein at least 3 pulverulent components are used, wherein at least 2 of the 3 pulverulent components comprise polyurethanes having a Shore hardness ascertained to DIN ISO 7619-1:2012 of ≥ 40A to ≤ 90D, and the differential in the Shore hardnesses between the 3 pulverulent components is ≥ 2A to ≤ 40A.

8. Method according to any of the preceding claims, wherein at least 3 pulverulent components are used, wherein at least 2 of the 3 pulverulent components comprise polyurethanes having a Shore hardness ascertained to DIN ISO 7619-1:2012 of ≥ 40A to ≤ 90D, and the differential in the Shore hardnesses between the pulverulent components is ≥ 2A to ≤ 40A, and at least one pulverulent component has a melting point of ≥ 50°C above the melting points of the other pulverulent components.

9. Method according to any of the preceding claims, wherein the laying of the pulverulent components (2, 3) in method step a) via a location-selective laying method is selected from the group consisting of powder screenprinting, powder suspension screenprinting, electrostatic roll or plate powder laying methods, powder jetting, powder dispensing, powder suspension printing or combinations of at least two methods therefrom.

10. Method according to any of the preceding claims, wherein the or at least one of the low-melting powders (3) is a reactive powder which is reacted in method step b).

## Revendications

1. Procédé de fabrication additive de composants, comprenant les étapes suivantes :
a) dépôt d'une ou plusieurs couches d'au moins deux composants pulvérulents différents, ayant une différence de points de fusion ≥ 50 °C, sur un substrat ou sur une couche déjà déposée, les composants pulvérulents ayant le point de fusion le plus bas (3) étant déposés en tant que composant et le composant pulvérulent ayant le point de fusion le plus élevé (2) en tant que négatif du premier, pour former une couche ;
b) traitement thermique de l'empilement de couches en poudre (1) à une température supérieure au point de fusion du composant ayant le point de fusion le plus bas (3) et inférieure au point de fusion du composant ayant le point de fusion le plus élevé (2), les constituants en poudre du composant ayant le point de fusion plus bas (3) subissant une fusion et au moins partiellement une fusion combinée ;
c) refroidissement de l'empilement de couches pulvérulent (1) ayant subi le traitement thermique de l'étape b) à une température inférieure au point de fusion du composant (3) ayant le point de fusion le plus bas et
d) élimination des composants pulvérulents qui n'ont pas subi de fusion combinée, avec obtention du composant,
**caractérisé en ce que**
| | |
|---|---|
| soit | le composant pulvérulent ayant le point de fusion le plus bas (3) est choisi dans le groupe consistant en la polyétheréthercétone (PEEK), la polyaryléthercétone (PAEK), la polyéthercétonecétone (PEKK), les polyéthersulfones, le polyimide, le polyétherimide, les polyesters, les polyamides, les polycarbonates, les polyuréthanes, le poly(chlorure de vinyle), le polyoxyméthylène, le poly(acétate de vinyle), les polyacrylates, les polyméthacrylates, le polyéthylène, le polypropylène, le polylactide, l'ABS (copolymères acrylonitrile-butadiène-styrène), le PETG (poly(téréphtalate d'éthylène) modifié par le glycol), le polystyrène ou les mélanges d'au moins deux des polymères ci-dessus, et **en ce que** le composant pulvérulent ayant le point de fusion le plus élevé (2) est un sel inorganique des métaux alcalins, un sel inorganique des métaux alcalino-terreux ou un mélange d'au moins deux des sels mentionnés, |
| soit | le composant pulvérulent ayant le point de fusion le plus bas (3) est le polychloroprène (CR), le polybutadiène (BR), le polybutadiènenitrile (NBR), le polybutadiènenitrile hydrogéné (HNBR), l'éthylène-acétate de vinyle (EVA), le caoutchouc fluoré, les copolymères à blocs styrène-butadiène (SBS), le poly(chlorure de vinyle) (PVC), le poly(acétate de vinyle) (PVA), le polyfluoréthylène (PTFE) ou la polyarylsulfone, et **en ce que** le composant pulvérulent ayant le point de fusion le plus élevé (2) est NaCl, MgSO₄, MgCl₂ ou CaSO₄, sauf que le CaSO₄ n'est pas prévu pour le polyfluoréthylène (PTFE). |

2. Procédé selon la revendication 1, dans lequel 90 % en poids des particules du composant pulvérulent ayant le point de fusion le plus bas (3) présentent un diamètre des particules, mesuré selon ISO 13320:2009-10, ≤ 0,25 mm.

3. Procédé selon l'une des revendications précédentes, dans lequel le rapport du diamètre moyen des particules du composant pulvérulent ayant le point de fusion le plus bas (3) au diamètre moyen des particules du composant pulvérulent ayant le point de fusion le plus élevé (2), calculé à partir de D_{niedrig}/D_{hoch}, est ≥ 1 et ≤ 10.

4. Procédé selon l'une des revendications précédentes, dans lequel le traitement thermique de l'étape b) est réalisé avec une différence de pression ≥ 25 kPa par rapport à la pression normale.

5. Procédé selon l'une des revendications précédentes, dans lequel, avant le traitement thermique de l'étape b), l'empilement de couches en poudre (1) est soumis à un gaz inerte.

6. Procédé selon l'une des revendications précédentes, dans lequel la température moyenne de l'étape b) est de ≥ 20 °C supérieure à la température moyenne de l'étape a).

7. Procédé selon l'une des revendications précédentes, dans lequel au moins 3 composants pulvérulents sont utilisés, au moins 2 des 3 composants pulvérulents comprenant des polyuréthanes ayant une dureté Shore, déterminée selon DIN ISO 7619-1:2012, de ≥ 40A à ≤ 90D, et la différence des duretés Shore entre les 3 composants pulvérulents étant ≥ 2A à ≤ 40A.

8. Procédé selon l'une des revendications précédentes, dans lequel au moins 3 composants pulvérulents sont utilisés, au moins 2 des 3 composants pulvérulents comprenant des polyuréthanes ayant une dureté Shore, déterminée selon DIN ISO 7619-1:2012, de ≥ 40A à ≤ 90D et la différence des duretés Shore entre les composants pulvérulents étant ≥ 2A à ≤ 40A, et au moins un composant pulvérulent présentant un point de fusion de ≥ 50 °C supérieur au point de fusion des autres composants pulvérulents.

9. Procédé selon l'une des revendications précédentes, dans lequel le dépôt des composants pulvérulents (2, 3) de l'étape a) par un procédé de dépôt localisé, choisi dans le groupe consistant en la sérigraphie de poudres, la sérigraphie en suspension de poudres, le procédé de dépôt de poudre électrostatique sur cylindres ou plaques, le jet de poudre, la distribution de poudre, l'impression de poudre en suspension ou les combinaisons d'au moins deux de ces procédés.

10. Procédé selon l'une des revendications précédentes, dans lequel la ou l'au moins une poudre à bas point de fusion (3) est une poudre réactive, qui est mise à réagir dans l'étape b).
